# EUROPEAN PATENT APPLICATION

(11) **EP 1 734 452 A1**
(43) Date of publication of application: **20.12.2006**
(21) Application number: 05720473.7
(22) Date of filing: 10.03.2005
(51) Int. Cl.: G06F 12/14, G06Q 10/00, H04L 9/14, H04N 7/16

(54) **RECEPTION DEVICE, TRANSMISSION DEVICE, SECURITY MODULE, AND DIGITAL RIGHT MANAGEMENT SYSTEM**

(30) Priority: 31.03.2004 JP 2004106339
(71) Applicant: Matsushita Electric Industries Co., Ltd., Kadoma-shi, Osaka 571-8501 (JP)
(72) Inventor: HIGASHI, Akio c/o Matsushita El. Ind. Co.,Ltd., Chuo-ku, Osaka-shi, Osaka 540-6319 (JP); OKAMOTO, Ryuichi c/o Matsushita El. Ind. Co.,Ltd., Chuo-ku, Osaka-shi, Osaka 540-6319 (JP); MURAKAMI, Hiroki c/o Matsushita El. Ind. Co.,Ltd., Chuo-ku, Osaka-shi, Osaka 540-6319 (JP); TOKUDA, Katsumi c/o Matsushita El. Ind. Co.,Ltd., Chuo-ku, Osaka-shi, Osaka 540-6319 (JP)
(74) Representative: Balsters, Robert
(86) International application number: PCT/JP2005/004202
(87) International publication number: WO 2005/098631

(57) **Abstract**

A broadcast station that is a transmission device assigns an ID and a license transformation period to a license to be generated, and transmits to a terminal apparatus 102, in order to provide a digital right management system which can provide a protection for the rights of a provider while preventing an unauthorized obtainment of a license to be transmitted through a digital broadcast. The terminal apparatus 102 records a license import log including the license ID and license transformation period assigned to the license. Further, the terminal apparatus 102 controls a license obtainment in the case where the same license has been obtained by the time of obtaining the license. Furthermore, the license received by the terminal apparatus 102 is kept at least until the license transformation period expires.

## Description

### Technical Field

The present invention relates to a system for managing a right to use a digital content such as video and music distributed through a digital broadcast, the Internet and the like, and allowing a user to use the digital content based on the right to use the digital content in a terminal apparatus, and in particular to a system capable of reliably controlling obtainment of the right to use the digital content in the terminal apparatus according to an intention of the provider.

### Background Art

In recent years, a content distribution service of allowing use of a digital content (hereafter referred to as a content) such as music and video in a terminal apparatus by distributing the digital content from a broadcast station to the terminal apparatus through a digital broadcast, a digital cable television (CATV), the Internet and the like, has entered a stage of practice. In general, a copyright protection technology is used for such content distribution service in order to protect a copyright of a content and prevent unauthorized use of the content by a malicious user. The copyright protection technology is, in specific, a technology of securely controlling a content use such as the reproduction of the content by a user, and copying of the content onto a recording medium, using a cipher technology and an authentication technology. The use of the copyright protection technology enables a content provider and a service provider such as a broadcast station to securely control the content use by a user in the terminal apparatus.

By the way, in recent years, there has been examined a use style, with high usability for a user, of a terminal apparatus having a mass storage such as a Hard Disk Drive (HDD), whereby the distributed content is stored temporarily in the terminal apparatus and the stored content is viewed when the user wants to. In the Association of Radio Industries and Businesses (ARIB) that is an organization of standardization of digital broadcast in Japan, a server type broadcast method is standardized as a digital broadcast method of using a mass storage function, and, in particular, a conditional access method has been developed as a method for restricting the reproduction at the time of storing the content. Note that, ARIB STD-B25 4.1 version describes in detail about the conditional access method in the server type broadcast method.

In the terminal apparatus having such storage function, in addition to a content, a license that is a right to use the content is also stored in the terminal apparatus so that the license can be freely duplicated. As the consequence, there is a possibility that unlimited number of licenses can be obtained for the same content. Obviously, the license is generally distributed in an encrypted form so that not every user can freely use the license. However, at least, the user who made a viewing contract with a broadcast station can easily obtain the license without limits, especially in the case of monthly contract (subscription) and the like.

As a digital right management system for solving problems similar to the aforementioned problems, there is disclosed a method of managing contents' ID to be written on a recording medium in a list form, for limiting the number of contents to be written on the recording medium (e.g. refer to Patent Reference 1). In this method, the maximum of the list size is also managed in order to prevent unlimited increase of the size of the list in which the contents' ID are described. In the case where the list size reaches the maximum, the contents' IDs are deleted in order of registration date on the list starting from the oldest record.
Patent Reference 1: Japanese Laid-Open Patent Application No. 2004-5526

### Disclosure of Invention

### Problems that Invention is to Solve

However, in a conventional digital management system, a method of deleting the records from the list in a chronological order of registration date is used, so that there is a possibility that the same multiple licenses are falsely obtained without limits resulting from the repetitions of registration/deletion of the license ID on/from the list. Therefore, there is a problem that provider's right to limit the number of licenses available for a user to obtain cannot be protected sufficiently.

In addition, in the case where an IC card and the like are used for the license management, there is a problem that a memory in the IC card is taken up in a management method of importing all licenses obtained into the IC card regardless of whether or not the user actually watches the content.

In order to solve such conventional problems, an object of the present invention is to provide a reception device and a transmission device, which can prevent unlimited license obtainments by a user and prevent an increase of the size of information relating to the license management to be recorded on the IC card and the like, in the case of distributing licenses through digital broadcast and the like.

### Means to Solve the Problems

In order to achieve the aforementioned problems, a reception device according to the present invention is a reception device which obtains a license, transmitted from a transmission device, for permitting use of a content, and uses the content based on the license, wherein at least a license import period and a license ID are assigned to the license, the license import period being a period during which the license can be imported to the reception device and made available for use, the reception device comprising: a license importing unit which imports the license transmitted from the transmission device; a log recording unit which holds a license import log including the license ID and the license import period, at least until the license import period expires; and a license import controlling unit which controls importing of the license to be performed by the license importing unit, in the case where the license import log includes a license ID that is the same as the license ID of the license imported by the license importing unit.

With this structure, the license import controlling unit of the reception device can prevent an unauthorized obtainment of the license using the license ID and the license import period.

Also, the reception device according to the present invention further includes: a license decrypting unit which decrypts an encrypted license once before the encrypted license is imported by said license importing unit, and to generate a decrypted license; a re-encrypting unit which re-encrypts the decrypted license using an encryption key that is different from an encryption key used for encrypting the encrypted license, and to generate a re-encrypted license; and a storing unit which holds at least the re-encrypted license.

Further, in the reception device according to the present invention, an encryption transformation period is further assigned to the license, the encryption transformation period being a period during which a re-encryption can be performed by said re-encrypting unit, and the re-encrypting unit generates the re-encrypted license by re-encrypting a license within the encryption transformation period, and stores the re-encrypted license into the storing unit.

According to these structures, the license re-encrypted by the re-encrypting unit can be stored in the storing unit, while marking an authorized license using information about the encryption transformation period. Therefore, the problem of occupying the memory of the IC card with the information relating to the content by importing only the authorized license that is used by a user into an IC card and the like can be solved.

Further, a transmission device according to the present invention is a transmission device which transmits a license to a reception device which uses a content based on the license for permitting use of the content, the transmission device including: a license generating unit which generates the license; a license ID assigning unit which assigns the license with a license ID that is an identification number; a license import period assigning unit assigns the license with a license import period that is a period during which at least the license can be imported to the reception device and made available for use; and a transmitting unit which transmits, to the reception device, the license to which at least the license ID and the license import period are assigned.

With these structures, the transmission device can attach at least a license ID and a license import period to the license and transmit to the reception device. Therefore, the information relating to the license can be more appropriately managed.

Further, in the transmission device according to the present invention, the reception device includes a re-encrypting unit which generates a re-encrypted license by re-encrypting a decrypted license using an encryption key that is different from an encryption key used for encrypting the license, the transmission device further includes an encryption transformation period assigning unit which assigns the license with an encryption transformation period that is a period during which re-encrypting of the license can be performed by the re-encrypting unit, wherein the transmitting unit transmits, to the reception device, the license to which at least the license ID and the encryption transformation period are assigned.

With this structure, the transmission device can attach an encryption transformation period that is judgment information for re-encryption by the reception device, and transmit to the reception device.

Further, a security module according to the present invention is a security module which operates in conjunction with a terminal apparatus that uses a content based on a license, wherein at least a license import period and a license ID are assigned to the license, the license import period being a period during which the license can be imported to the reception device and made available for use, the security module includes: a license importing unit which imports the license transmitted from the transmission device; a log recording unit which holds a license import log including the license ID and the license import period, at least until the license import period expires; and a license import controlling unit which controls importing of the license performed by the license importing unit, in the case where the license import log includes a license ID that is the same as the license ID of the license imported by the license importing unit.

Further, the security module according to the present invention includes a license decrypting unit which decrypts an encrypted license once before the encrypted license is imported by the license importing unit, and to generate a decrypted license; and a re-encrypting unit which re-encrypts the decrypted license using an encryption key that is different from an encryption key used for the encryption of the encrypted license, and to generate a re-encrypted license.

According to these structures, in the security module, problems that the license is falsely used and that the information for the license management takes up the memory of the security module can be solved using information of the license import period and the encryption transformation period attached to the license.

Note that, in order to achieve the aforementioned object, the present invention can be realized as a receiving method, transmitting method and a license obtainment method of including, as steps, the characteristic constituents of the reception device, the transmission device and the security module, or as a program of including those steps. The program can be not only stored in a ROM and the like included in the reception device and the transmission device, but also distributed through a recording medium such as a CD-ROM, and a communication network.

### Effects of the Invention

According to the present invention, both of an unlimited license obtainment and an increase of data size to be managed can be prevented by managing the ID and validity period of the license obtained by the terminal apparatus as an import log of the license and holding the license import log at least until the import period of the license expires. Also, the license that is actually used by a user only can be imported into the IC card using the information about the encryption transformation period so that the size of the data to be recorded onto the IC card can be appropriately managed.

### Brief Description of Drawings

FIG. 1 is a diagram showing a schematic structure of a content distribution system as a whole according to an embodiment of the present invention.
FIG. 2 is a diagram showing an overview of an encryption scheme according to the embodiment of the present invention.
FIG. 3 is a functional block diagram showing a structure of a broadcast station according to the embodiment of the present invention.
FIG. 4 is a diagram showing a structure of a contract information management table of a contract information management DB according to the embodiment of the present invention.
FIG. 5 is a diagram showing a structure of a work key management table of a work key DB according to the embodiment of the present invention.
FIG. 6 is a diagram showing a structure of a content attribute information management table of a content attribute information DB according to the embodiment of the present invention.
FIG. 7 is a diagram showing a structure of a content key management table of a content key DB according to the embodiment of the present invention.
FIG. 8 is a diagram showing a structure of a content management table of a content DB according to the embodiment of the present invention.
FIG. 9 is a diagram showing an EMM according to the embodiment of the present invention.
FIG. 10 is a diagram showing a structure of an ECM-Kw and an ECM-Kc according to the embodiment of the present invention.
FIG. 11 is a diagram showing a structure of an ECM for Kc transmission according to the embodiment of the present invention.
FIG. 12 is a diagram showing a structure of a terminal apparatus according to the embodiment of the present invention.
FIG. 13 is a diagram showing a structure of a common information table of a card management information DB according to the embodiment of the present invention.
FIG. 14 is a diagram showing a structure of a provider unique information table of the card management information DB according to the embodiment of the present invention.
FIG. 15 is a diagram showing a structure of a TL according to the embodiment of the present invention.
FIG. 16 is a diagram showing a structure of a license according to the embodiment of the present invention.
FIG. 17 is a flowchart showing a contract processing in the broadcast station and an EMM receiving processing in a terminal apparatus and an IC card according to the embodiment of the present invention.
FIG. 18 is a flowchart showing a content transmitting processing in the broadcast station according to the embodiment of the present invention.
FIG. 19 is a flowchart showing a content storage processing in the terminal apparatus and the IC card according to the embodiment of the present invention.
FIG. 20 is a diagram showing a message presented to a user when a license transformation is not permitted according to the embodiment of the present invention.
FIG. 21 is a flowchart showing a license transformation permission judgment processing in the IC card according to the embodiment of the present invention.
FIG. 22 is a flowchart showing a content use processing in the terminal apparatus and the IC card according to the embodiment of the present invention.
FIG. 23 is a diagram showing a structure of a terminal apparatus according to a variation of the embodiment of the present invention.
FIG. 24 is a diagram showing a structure of an ECM for Kc transmission according to the variation of the embodiment of the present invention.
FIG. 25 is a diagram showing a structure of a TL according to the variation of the embodiment of the present invention.
FIG. 26 is a diagram showing a message presented to a user in the case where it is detected that a PPV content has been purchased more than once according to the variation of the present invention.
FIG. 27 is a diagram showing a message presented to a user in the case where a license cannot be obtained because the license has been obtained by another terminal according to the variation of the present invention.
FIG. 28 is a functional block diagram of a broadcast station according to a second embodiment.
FIG. 29 is a diagram showing an example of a content attribute information management table recorded in a content attribute information DB of a transmission device according to the second embodiment.
FIG. 30 is a diagram showing an example of a content management table recorded in a content DB of the transmission device according to the second embodiment.
FIG. 31 is a reference diagram showing an example of a data structure of the ECM for Kc transmission to be transmitted from the transmission device according to the second embodiment.
FIG. 32 is a reference diagram showing a system structure of a reception device according to the second embodiment.
FIG. 33 is a reference diagram showing an example of an import log table (Import List: IL) recorded in an import log DB of an IC card of a reception device according to the second embodiment.
FIG. 34 is a flowchart showing an operational procedure for the transmission device in the broadcast station to transmit a content according to the second embodiment.
FIG. 35 is a flowchart showing a content receiving and encryption transformation processing in the terminal apparatus and the IC card according to the second embodiment.
FIG. 36 is a flowchart showing an operational procedure of an encryption transformation permission judgment processing (corresponding to 53501 in FIG. 35) in the terminal apparatus according to the second embodiment.
FIG. 37 is a flowchart showing a processing procedure at the time of importing a license in the terminal apparatus and the IC card according to the second embodiment.
FIG. 38 is a flowchart showing a specific operational procedure of a license import permission judgment (corresponding to step S3702) shown in FIG. 37 according to the second embodiment.
FIG. 39 is a diagram showing an import log table (Import List: IL) for a Pay Per Content (PPC) managed by the IC card according to the variation.
FIG. 40 is a reference diagram showing an example of an ECM for Kc transmission to be transmitted from a transmission device to a reception device according to the variation.
FIG. 41 is a flowchart showing a processing procedure for the reception device to import a license of the PPC according to the variation.
FIG. 42 is a flowchart showing a specific operational procedure of a license import permission judgment (corresponding to step S4102) shown in FIG. 41.

### Numerical References

- 1: Content distribution system
- 101: Broadcast station
- 102: Terminal apparatus
- 103: IC card
- 104: Digital broadcast
- 105: Communication network
- 201: Scramble key Ks
- 203, 502, 1406: Work key Kw
- 205, 703, 1606: Content key Kc
- 207, 252, 406, 1302: Master key Km
- 301: Contract information management DB
- 302: Work key DB
- 303: Content attribute information DB
- 304: Content key DB
- 305: Content DB
- 306: Communication unit
- 307: Contract processing unit
- 308: EMM generating unit
- 309: EMM encrypting unit
- 310, 2801: ECM generating unit
- 311: ECM encrypting unit
- 312: Content coding unit
- 313: Multiplexing unit
- 314: Content encrypting unit
- 315: Content transmitting unit
- 900: EMM
- 1000: ECM-Kw
- 1020: ECM-Kc
- 1100, 2400: ECM for Kc transmission
- 1201: Transmitting/receiving unit
- 1202: Separating unit
- 1203: Storing unit
- 1204: Storage managing unit
- 1205: Content decrypting unit
- 1206: Content using unit
- 1207, 1213: Card I/F unit
- 1208: User I/F unit
- 1210: Card management information DB
- 1211: Transformation log DB
- 1212: License DB
- 1214: ECM/EMM decrypting unit
- 1215: ECM/EMM processing unit
- 1216: License transformation processing unit
- 1217: License processing unit
- 1500, 2500: TL
- 1600: License
- 3201: ECM re-encrypting unit
- 3202: License import processing unit
- 3203: Import log DB

### Best Mode for Carrying Out the Invention

Hereafter, embodiments according to the present invention are described in detail with references to drawings.

### (First Embodiment)

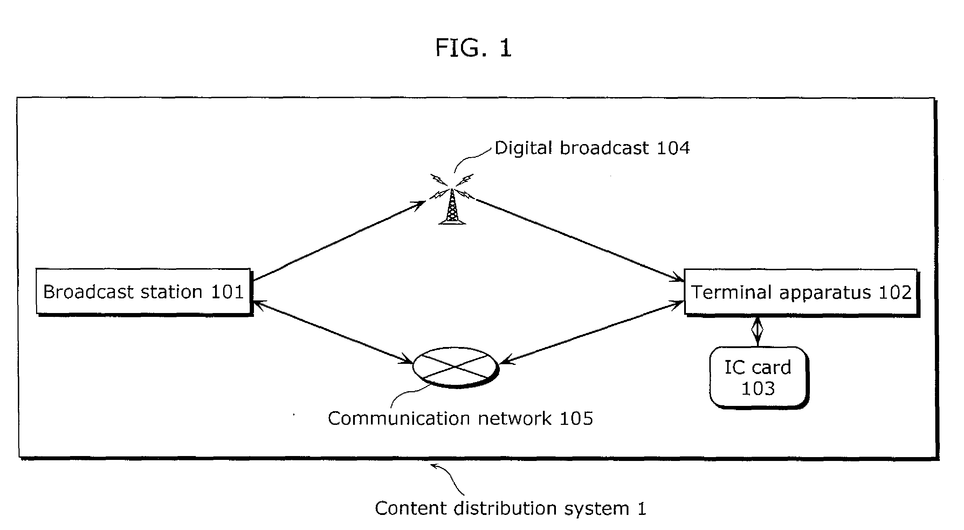

FIG. 1 is a diagram showing a schematic structure of a content distribution system 1 as a whole using a digital right management system, according to the embodiment of the present invention.

This content distribution system 1 is a system for securely controlling the use of encrypted content transmitted by a transmission device placed in a broadcast station through a digital broadcast, and allowing a user to use the content in the terminal apparatus. It includes a broadcast station 101 which distributes a content and a license of the content, a terminal apparatus 102 which uses the content, an IC card 103 used for using the content together with the terminal apparatus 102, a digital broadcast 104 which connects these constituents each other, and a communication network 105.

Note that there can be a plurality of the terminal apparatus 102. However, in FIG. 1, single terminal apparatus 102 only is described as a representative of other terminal apparatuses.

The broadcast station 101 includes a transmission device which distributes the content encrypted (hereafter referred to as encrypted content), an encryption key for decrypting the encrypted content, and the like.

The terminal apparatus 102 is an device which receives the encrypted content through the digital broadcast 104 and the communication network 105 together with the license for decrypting the encrypted content, decrypts the encrypted content, and uses the content. Also, the terminal apparatus 102 has an interface into which the IC card 103 is inserted, and executes processing which requires a high level of security by working in conjunction with the IC card 103.

The IC card 103 is a hardware module that is anti-tampered. In specific, the IC card 103 is a card with a high level of security such as B-CAS card in which a standard Conditional Access System (CAS) for a domestic digital broadcast is installed, and a module that is a secure digital (SD) card in which a security processor is installed.

The digital broadcast 104 is a wireless digital broadcast such as Broadcasting Satellite (BS) digital broadcast, Communication Satellite (CS) digital broadcast and a terrestrial digital broadcast, and a wired digital broadcast such as a digital CATV.

The communication network 105 is a network for mutually connecting the broadcast station 101 and the terminal apparatus 102. For example, the communication network 105 is a high-speed Internet network such as an Asymmetric Digital Subscriber Line (ADSL), Fiber to the Home (FTTH), an interactive digital CATV, and IEEE802.11g.

Note that, the structures of the broadcast station 101 and the terminal apparatus 102 are described later in detail with references to the diagrams.

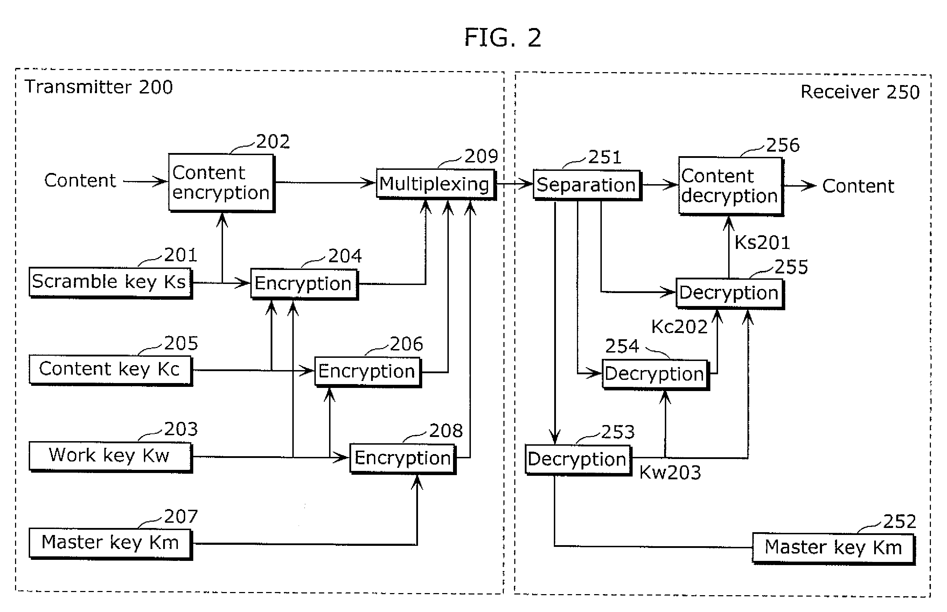

Here, an encryption scheme of a limited reproduction method in the server type broadcast method is described with reference to FIG. 2.

In FIG. 2, the transmitter 200 of transmitting a content and an encryption key, and the receiver 250 of receiving the content and the encryption key are separately explained.

At the transmitter 200, a content is scrambled, in other words, encrypted (202) with an encryption key called a scramble key Ks 201. For scrambling the content, a payload portion of Transport Stream (hereafter referred to as TS) packets is scrambled on a packet-by-packet basis of a MPEG-2 TS. Also, the scramble key Ks 201 is a time variant key which varies every few seconds for increasing security against unauthorized receiving.

Further, the scramble key Ks 201 for scrambling the content is encrypted (204) with the work key Kw 203 in order to prevent false eavesdropping by a malicious user. The work key Kw 203 is an encryption key used for a conventional general limited receiving method and assigned to each contract with a broadcast provider or to each group. In general, the work key Kw203 is updated in a period of several months to years in order to secure the security of the work key Kw203 itself. The data structure which at least includes the scramble key Ks201 and for transmitting information relating to the content is called Entitlement Control Message (ECM), and is configured as a private section of the MPEG-2 Systems (IEC/ISO13818-1). The ECM encrypted with the work key Kw203 is called ECM-Kw and used for real time viewing of the broadcast contents.

The scramble key Ks201 is also encrypted (204) with the content key Kc205. The content key Kc 205 is an encryption key assigned to each content, and is configured as a private section of the MPEG-2 Systems as in the case of the ECM-Kw. The ECM including the scramble key Ks 201 at least and being encrypted with the content key Kc 205 is called ECM-Kc, and is used for stored viewing of the broadcast contents (TypeI content in the server type broadcast method).

Further, the content key Kc 205 is also encrypted (206) with the work key Kw 203 in order to prevent false eavesdropping by a malicious user. The ECM including the content key Kc 203 and being encrypted with the work key Kw 203 is called an ECM for Kc transmission, and is used for stored viewing of the broadcast content. The ECM for Kc transmission is configured as a private section of the MPEG-2 Systems as in the cases of the ECM-Kw and the ECM-Kc.

Since the work key Kw 203 which encrypts the ECM-Kw and the ECM for Kc transmission needs to be shared between the transmitter 200 and the receiver 250 prior to the content use, it is shared using the data structure called Entitlement Management Message (EMM) among both. Herein, as in the cases of the scramble key Ks201 and the content key Kc 205, the work key Kw 203 is encrypted (208) with an encryption key unique to the terminal apparatus 102 called a master key Km 207, for eavesdropping prevention. While the master key Km 207 also needs to be shared previously between the transmitter 200 and the receiver 250, a master key Km 252 of the receiver 250 is set by writing previously in a secured portion of the terminal apparatus 102, a module whose hardware is anti-tampered called security module and the like at the time of shipment.

Note that examples of data structures of ECM-Kw, ECM-Kc, ECM for Kc transmission and EMM are described later in detail with references to diagrams.

Also, under the present encryption scheme, in the terminal apparatus 102, the IC card may perform managing and processing of information which requires security in particular, such as the master key Km 207 and the work key Km 203.

Further, as an encryption algorithm used for the present encryption scheme, a common key encryption method such as Advanced Encryption Standard (AES) is used.

Furthermore, as for the work key Kw 203, a Secure Authenticated Channel (SAC) is established between the transmitter 200 and the receiver 250, and the work key Kw 203 may be shared through the communication network 105.

The encrypted content such as the ECM-Kw, the ECM-Kc, the ECM for Kc transmission and the EMM that are generated as above described are TS-packetized in a MPEG-2 format, and transmitted to the receiver 250 after, if necessary, being multiplexed (209) with data such as Program Specific Information (PSI)/Service Information (SI).

On the other hand, at the receiver 250, the MPEG-2 TS packets transmitted from the transmitter 200 are received and separated (251) so as to obtain the encrypted content such as the ECM-Kw, the ECM-Kc, the ECM for Kc transmission and the EMM.

The encrypted EMM is decrypted (253) using the master key Km252 that is held previously in the receiver 250, and obtains the work key Kw 203. The work key Kw 203 is held in a non-volatile memory in the receiver 250.

In the case where the content is viewed at a real time, the ECM-Kw is obtained; the ECM-Kw encrypted with the work key Kw 203 is decrypted (255); and the scramble key Ks 201 is obtained. The content becomes available for use by decrypting (256) the encrypted content with the scramble key Ks 201.

On the other hand, in the case where the content is stored and viewed, the encrypted content of the ECM-Kc, and ECM for Kc transmission that are recorded in the storage unit not shown in the diagram are read out. While the ECM for Kc transmission is repeatedly transmitted from the transmitter 200, the receiver 250 only needs to obtain it once. Note that, since the ECM-Kw is used only at the time of real time viewing, it is not stored in the receiver 250.

The encrypted ECM for Kc transmission is decrypted (254) so as to obtain the content key Kc 205, using the work key Kw 203 obtained by the method explained in the case of real time viewing. Through this, the ECM-Kc is decrypted (255) by the content key Kc 205, and the encrypted content is decrypted (256) so that the content use becomes possible.

In the above, the encryption scheme of the limited reproduction method of the server-type broadcast method is described using FIG. 2. Hereafter, in the embodiment of the present embodiment, a digital right management system based on the encryption scheme explained in FIG. 2 is described.

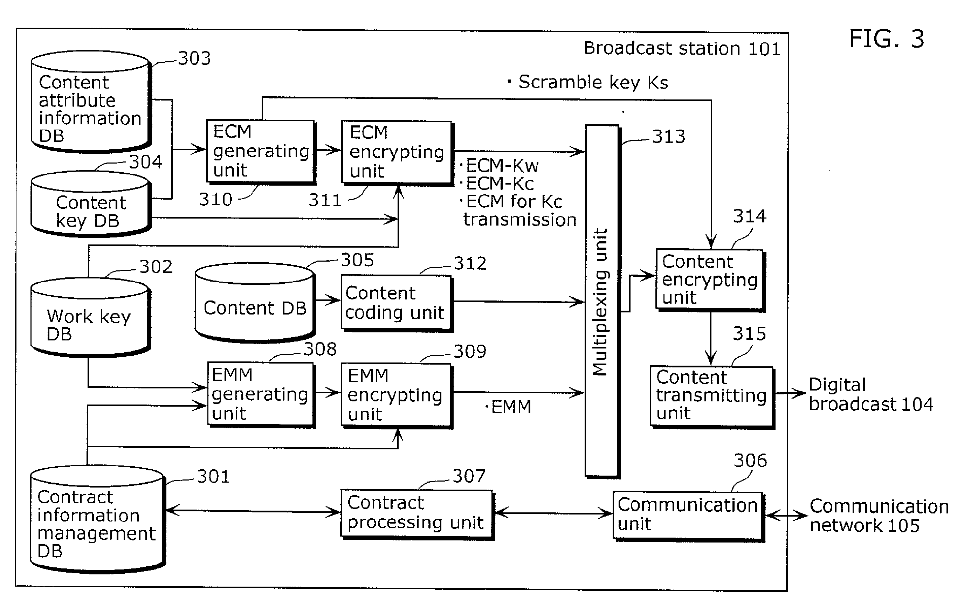

Referring to FIG. 3 to FIG. 22, it is described in detail about the use of content based on a license through the process that, in content distribution system 1, the content (program) and the license are distributed by a digital broadcast 104, and the terminal apparatus 102 stores the content and the license in a HDD and the like.

FIG. 3 is a functional block diagram showing a structure of the broadcast station 101.
The broadcast station 101 includes: a contract information management DB 301 which manages contract information; a work key DB 302 which manages work keys; a content attribute information DB 303 which manages attribute information relating to a content; a content key DB 304 which manages a content key to be assigned to a respective content; a content DB 305 which manages the content such as video and audio; a communication unit 306 which provides an interface with the terminal apparatus 102; a contract processing unit 307 which manages user's contract information; an EMM generating unit 308 which generates individual information for each terminal apparatus 102; an EMM encrypting unit 309 which encrypts an EMM; an ECM generating unit 310 which generates information common to all terminal apparatuses 102; an ECM encrypting unit 311 which encrypts an ECM; a content coding unit 312 which encodes the content; a multiplexing unit 313 which multiplexes a MPEG-2 TS; a content encrypting unit 314 which encrypts TS packets such as video and audio; and a content transmitting unit 315 which transmits the TS packetized content.

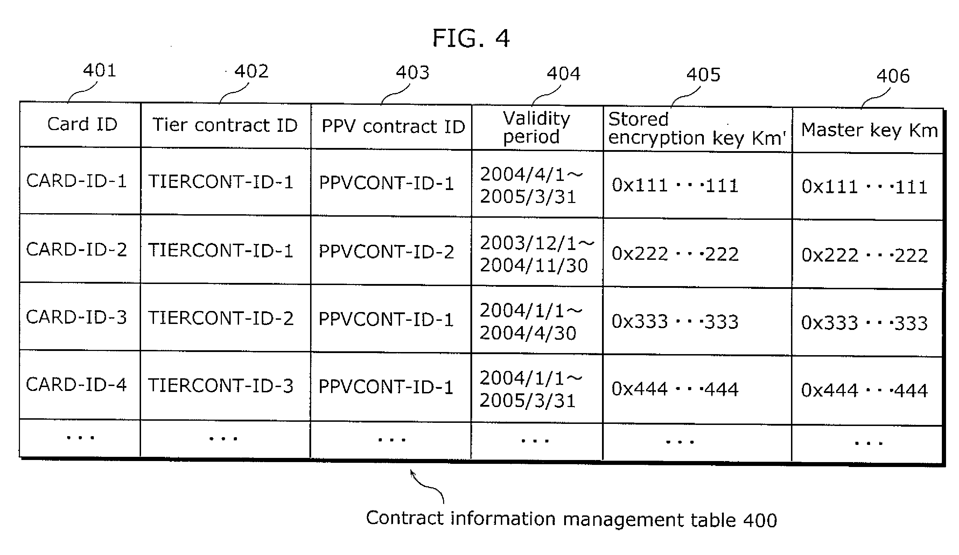

The contract information management DB 301 is a database for managing information relating to a user's viewing contract of a content. Specifically, the contract information management DB 301 has a contract information management table 400 which collectively manages information relating to the viewing contract and the master key Km 207 for respective IC card 103, as shown in FIG. 4. The contract information management DB 301 is mainly referred by the EMM generating unit 308 when generating an EMM for distributing viewing contract information to each terminal apparatus 102.

The card ID 401 is information for uniquely identifying an IC card 103 to be inserted into the terminal apparatus 102, and is information used as a destination for the IC card 103 which made a contract to transmit an EMM 900.

A tier contract ID 402 is an ID for identifying a monthly contract (subscription) for receiving a service provided by the broadcast station 101, and shows a type of contract form. For example, there are a "sports contents package" which allows viewing contents relating to sports, a "movie contents package" which allows viewing movie contents, and the like.

A Pay Per View (PPV) contract ID 403 is an ID for identifying a pay-per-view viewing contract for receiving a service provided by the broadcast station 101, and shows a type of a contract form as in the case of the tier contract ID 908.

A validity period 404 is a contract period with the broadcast station 101, and shows that the content provided by the broadcast station 101 can be used during the validity period 404.

A stored encryption key Km' 405 is used in the case where the content and the license are bind to the terminal apparatus 102 which has obtained the content and the license, in other words, the IC card 103, in the case where the terminal apparatus 102 stores the content and the license (ECM, etc.) into a HDD and the like.

A master key Km 406 is an encryption key unique to the IC card 103 and used for encrypting an EMM. It is installed in the IC card 103 at the time of shipping.

For example, in FIG. 4, the IC card 103 whose card ID 401 is "CARD-ID-1" subscribes services whose tier contract ID 402 is "TIERCONT-ID-1" and PPV contract ID 403 is "PPVCONT-ID-1", has the validity period 404 "2004/4/1 to 2005/3/31" and has a stored encryption key Km' 405 "0x111...111", and a master key Km 406 "0x111...111".

The work key DB 302 is a database for managing a key for encrypting the ECM to be transmitted when a user made a viewing contract with a provider, and has a work key management table 500. The work key DB 302 is used for providing a work key Kw 203 when an ECM-Kw and an ECM for Kc transmission are encrypted.

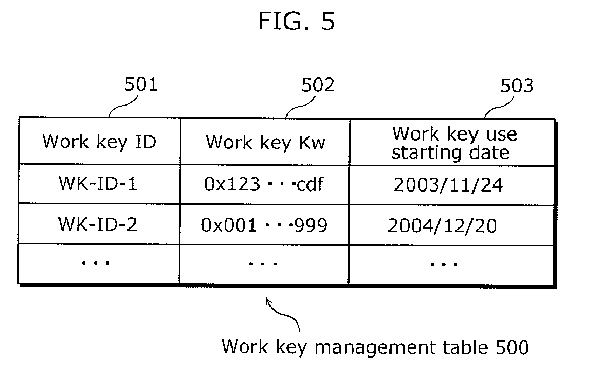

Specifically, as shown in FIG. 5, the work key DB 302 manages a work key management table 500 for managing a set of a work key ID 501, a work key Kw 502 and a work key use starting date 503.

For example, FIG. 5 shows that the work key Kw 502 corresponding to the work key ID 501 "WK-ID-1" is "0x123...cdf" and the work key use starting date 503 indicating a use starting date of the work key Kw 502 is "2003/11/24". In addition, for the encrypted ECM, the work key ID 501 is information used for specifying a work key Kw 203 used for the encryption, and set as a work key ID 1104 of the ECM-Kw and as a work key ID 1004 of the ECM for Kc transmission.

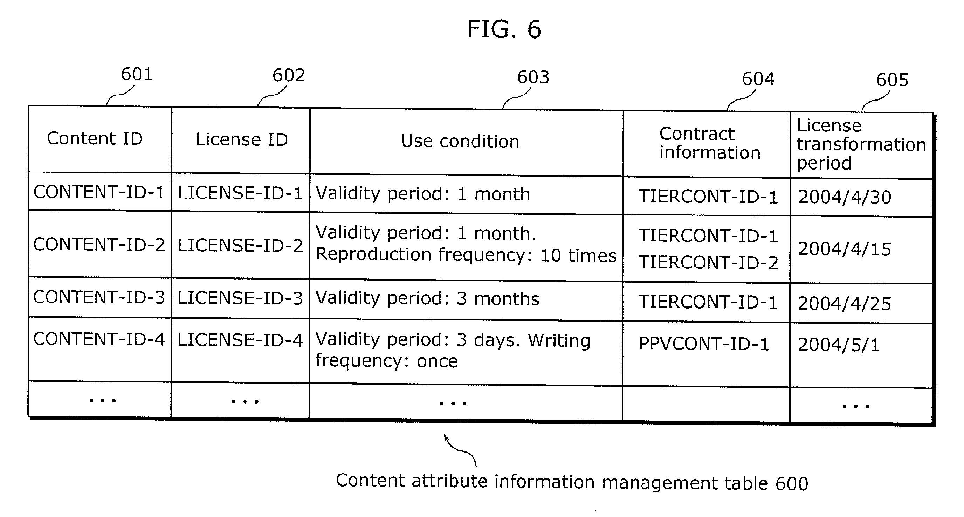

The content attribute information DB 303 is a database for managing various information relating to the content use such as use conditions of a content, types of contracts which allow viewing the content. Specifically, as shown in FIG. 6, the content attribute information DB 303 has a content attribute information management table 600 including a content ID 601 for uniquely specifying a content in the content distribution system 1, a license ID 602 for uniquely specifying a license in the content distribution system 1, a use condition 603, contract information 604, and a license transformation period 605. It should be noted that a license import period described in Claims corresponds to the license transformation period in the description of the present embodiment.

For example, a content whose content ID 601 is "CONTENT-ID-1" and the license ID 602 is "LICENSE-ID-1" has the use condition 603 "validity period of one month", the contract information 604 "TIERCONT-ID-1" and the license transformation period 605 "2004/4/30". Therefore, it is indicated that, in the case where a contract is made for the service of "TIERCONT-ID-1" with the broadcast station 101 and the license is obtained by "2004/4/30", the content can be reproduced for during a month after the content is stored. Note that, the license transformation processing relating to the license transformation period 605 is described in detail when the structure of the terminal apparatus 102 is described.

Also, the content whose content ID 601 is "CONTENT-ID-2" has the contract information 604 "TIERCONT-ID-1 and TIERCONT-ID-2". Therefore, in order to view the content, it is necessary to make a contract, with the broadcast station 101, for at least one of services "TIERCONTENT-ID-1" and "TIERCONT-ID-2". Also, the content whose content ID 601 is "CONTENT-ID-4" has the contract information 604 "PPVCONT-ID-1". Thus, it is indicated that the content is a PPV content.

The content key DB 304 is a database for managing encryption keys assigned to respective licenses (i.e. respective contents) for using contents stored in the terminal apparatus 102.

Specifically, the content key DB 304 has a content key management table 700 including a content ID 701 which is an identifier for uniquely identifying a content in the content distribution system 1, a license ID 702 which is an identifier for uniquely identifying a license in the content distribution system 1, and a content key Kc 703 which is assigned to the license ID 702.

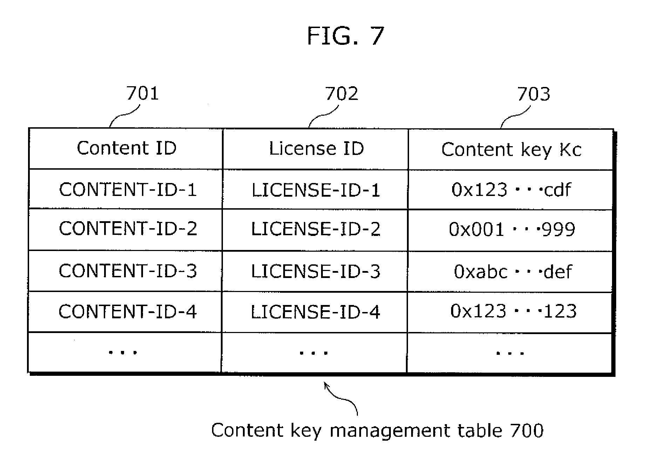

For example, FIG. 7 shows that the license ID 702 corresponding to the content 701 whose content ID is "CONTENT-ID-1" is "LICENSE-ID-1" and the content key KC 703 corresponding thereof is "0x123...cdf".

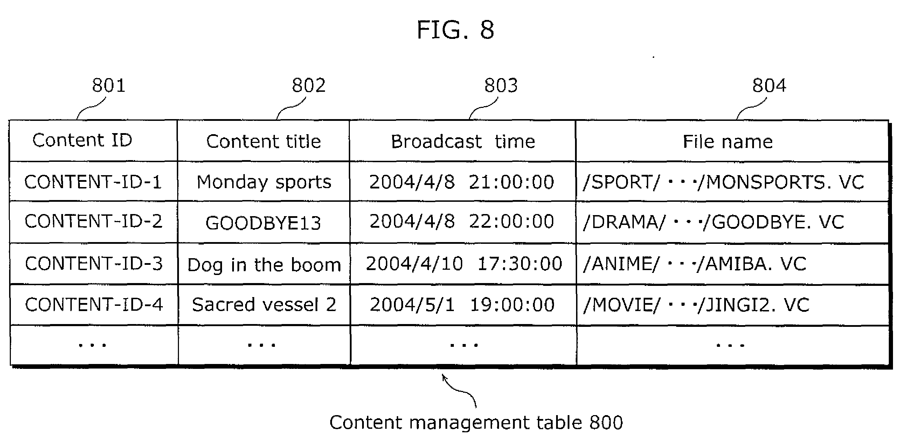

The content DB 305 is a database for storing contents. Specifically, as shown in FIG. 8, the content DB 305 has a content management table 800 including a content ID 801 for uniquely specifying a content in the content distribution system 1, a content title 802 indicating a title of a content, a broadcast date 803 indicating a date on which the content is distributed by a digital broadcast, and a file name 804 indicating a position of a file of each content in the content DB 305.

For example, it is indicated that the content whose content ID 801 is "CONTENT-ID-1" has a content tile "Monday Sports", its broadcast date 803 is "2004/4/8 21:00:00" and a Uniform Resource Identifier (URI) of the file name 804 in the content DB 305 is "/SPORT/.../MONSPORTS.VC" ("..." indicates that a portion of the URI is omitted).

Note that, the content management table 800 may be an analog Video Cassette Recorder (VCR), or may be a video camera for filming a live broadcast (a live program) instead of the content management table 800.

The communication unit 306 is a unit for communicating with the terminal apparatus 102 through the communication network 105.

The contract processing unit 307 is a unit for processing a subscription for a viewing contract sent from the terminal apparatus 102.
Specifically, the contract processing unit 307 receives a viewing contract with the broadcast station 101 through a Web browser and the like, and registers viewing contract information for the user (terminal apparatus 102) in the contract information management DB 301.

The EMM generating unit 308 is a unit for generating an EMM including a work key Kw 203 and user's contract information.

Specifically, the EMM generating unit 308 reads out, mainly for the user who made a new contract or changed a contract (terminal apparatus 102, that is an IC card 103), a tier contract ID 402, PPV contract ID 403, validity period 404 and the like that are the contract details to the user from the contract information management DB 301, and sets them to the EMM.

Here, it is described in detail about a data structure of the EMM.

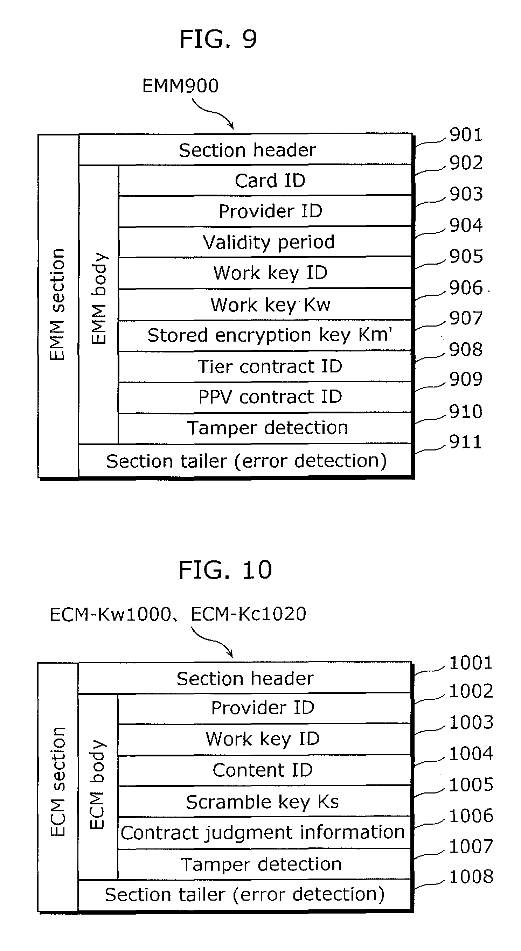

FIG. 9 is a diagram showing an example of a data structure of the EMM which transmits mainly a work key Kw 201 and information for each user (per IC card 103).

The EMM 900 shown in FIG. 9 includes a card ID 902, a provider ID 903, a validity period 904, a work key ID 905, a work key Kw 906, a stored encryption key Km' 907, a tier contract ID 908, a PPV contract ID 909, and a tamper detection 910. Also, in order to multiplex data into a transport stream in a private section method of the MPEG-2 Systems, a section header 901 and a section tailer (error detection) 911 are attached to the EMM 900. The most part of data shown in the EMM 900 is stored and managed in the IC card 103.

The card ID 902 is information, in the content distribution system 1, for uniquely identifying an IC card 103 to be inserted into the terminal apparatus 102 and used for a destination to which the EMM 900 is transmitted for the IC card 103 which made a contract processing.

The provider ID 903 is a code, in the content distribution system 1, for identifying a provider which provides a service and being referred together with the work key ID 905 that is described later.

The validity period 904 shows a contract period with the broadcast station 101, indicating that the content from the broadcast station 101 can be used during the validity period 904.

The work key ID 905 is information for identifying a work key Kw 203 for encrypting the ECM. For decrypting the ECM encrypted with the IC card 103, it can be judged which work key Kw 203 should be used for decrypting the encrypted ECM by referring to the work key ID 905 because same information as the work key ID 905 is set in an unencrypted portion of the ECM.

The work key Kw 906 is encryption assigned to a user for a contract with the broadcast station 101, and is used for decrypting the ECM-Kw encrypted with the IC card 103 and the ECM for Kc transmission.

The stored encryption key Km' 907 is used, in the terminal apparatus 102, for binding the content and the license to the terminal apparatus 102 which has obtained the content and the license, that is, the IC card 103 in the case where the content and the license (ECM, etc.) are stored in the HDD and the like.

The tier contract ID 908 is an ID for identifying a monthly contract (subscription) for the service provided by the broadcast station 101, and indicates a contract form with the broadcast station 101 such as "a standard package" and "a premium package".

The PPV contract ID 909 is an ID for identifying a pay-per-view viewing contract for a service provided by the broadcast station 101, and indicates a type of a contract form as in the case of the tier contract ID 908.

A hash value for detecting a tamper of the encrypted EMM 900 is assigned to the tamper detection 910. The hash algorithm uses a Message Authentication Code (MAC), a SHA-256 and the like that are results of encryption by a CBC mode of the AES.

Note that, while an example of setting the tier contract ID 908 and the PPV contract ID 909 as the EMM 900 as they are, respectively for the tier contract and the PPV contract, the respective ID indicated in a bit map and the like may be distributed in the EMM 900 and the amount of information to be transmitted and the amount of information to be held in the IC card 103 may be reduced.

Also, while an example of assigning a work key Kw 203 to each provider is described, the work key Kw 203 may be assigned to each contract such as each tier contract ID.

In the above, the detailed explanation about the data structure of the EMM 900 is described with reference to FIG. 9.
The EMM encrypting unit 309 is a unit of encrypting the EMM900 generated by the EMM generating unit 308 using an AES and the like.

Specifically, the EMM encrypting unit 309 encrypts the EMM 900 generated by the EMM generating unit 308 with the master key Km 207 obtained from the contract information management DB 301, and transmits to the multiplexing unit 313. For encrypting the EMM 900, an encryption mode of Cipher Block Chaining (CBC) + Output FeedBack (OFB) is used.

The ECM generating unit 310 is a unit of generating an ECM including a scramble key Ks 201 and the like. Specifically, the ECM generating unit 310 generates an ECM-Kw, an ECM-Kc, and an ECM for Kc transmission in response to an upper system in accordance with an output of the content. For the generations of the ECM-Kw and the ECM-Kc, scramble keys Ks are generated for every few seconds, and set to the ECM-Kw and ECM-Kc. For the generation of the ECM for Kc transmission, the use condition 603, the content key Kc 703 and the like are obtained from the content key DB 304 and the content attribute information DB 303 and set to the ECM for Kc transmission. Further, the generated scramble key Ks 201 is transmitted to the content encrypting unit 314 which encrypts the content.

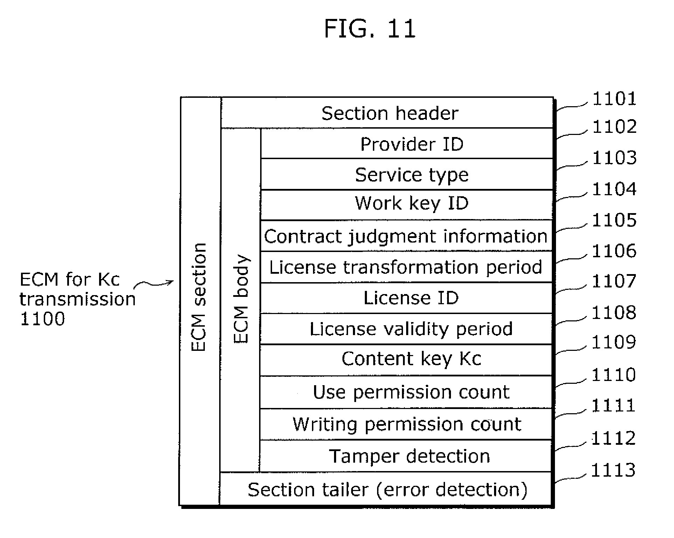

Here, with reference to FIG. 10 and FIG. 11, the detailed explanation about the data structures of the ECM-Kw, the ECM-Kc, and the ECM for Kc transmission is described.

FIG. 10 is a diagram showing an example of a data structure of the ECM-Kw and ECM-Kc which transmit mainly the scramble key Ks 201.

Each of the ECM-Kw 1000 and the ECM-Kc 1020 shown in FIG. 10 is information used for transmitting the scramble key Ks 201 and information relating to the content, and includes a provider ID 1002, a work key ID 1003, a content ID 1004, a scramble key Ks 1005, a contract judgment information 1006, and a tamper detection 1007. Also, in order to multiplex the ECM-Kw 1000 and the ECM-Kc 1020 into a transport stream in a private section format of the MPEG-2 Systems, a section header 1001 and a section tailer (error detection) 1007 are attached to the ECM-Kw1000 and the ECM-Kc1020.

The provider ID 1002 is a code for identifying a provider which provides a service in the content distribution system 1, and is referred together with the work key ID 1003 that is described next.

The work key ID 1003 is information for identifying a work key Kw 203 which encrypts the ECM, and is set in an unencrypted portion of the ECM. In the case where the IC card 103 is used for decrypting the encrypted ECM, it can be judged which work key Kw 203 should be used for decrypting the ECM by referring to the work key ID 1003.

The content ID 1004 is an identifier assigned uniquely to a content in the content distribution system 1, and is used for identifying the content.

The scramble key Ks 1005 is an encryption key for encrypting a payload portion of the TS packets of the content. In order to reduce the time required for the terminal apparatus 102 to obtain the scramble key Ks 1005 that is changed every few seconds, in general, a plurality of encryption keys are set for the scramble key Ks 1005.

The contract judgment information 1006 is information indicating an attribute of the content, and is used for judging whether or not the terminal apparatus 102 has made a contract to view the content in the case where the content is viewed by the terminal apparatus 102.

A hash value for detecting a tamper of the ECM to be encrypted is set to the tamper detection 1007. Similar to the case of the EMM 900, the hash algorithm uses a CBC-MAC of the AES, a SHA-256 and the like.

Next, FIG. 11 is a diagram showing an example of a data structure of the ECM for Kc transmission for transmitting the content key Kc 205 for decrypting the ECM-Kc 1020 mainly for the stored viewing.

The ECM 1100 for Kc transmission shown in FIG. 11 is information used for a transmission of the content key Kc 205 and a use condition (license) of the content, and includes a provider ID 1102, a service type 1103, a work key ID 1104, a contract judgment information 1105, a license transformation period 1106, a license ID 1107, a license validity period 1108, a content key Kc 1109, a use permission count 1110, a writing permission count 1111, and a tamper detection 1112. In addition, as in the cases of the ECM-Kw 1000 and the ECM-Kc 1020, a section header 1101 and a section tailer (error detection) 1103 are added to the ECM 1100.

The provider ID 1102, the work key ID 1104, the contract judgment information 1105, and the tamper detection 1112 apply to the descriptions of the provider ID 1002, the work key ID 1003, the contract judgment information 1006, and the tamper detection 1008 in the ECM-Kc 1000 and the ECM-Kc 1020. Therefore, the same descriptions are omitted in here.

The service type 1103 is a flag for identifying whether the content including the ECM 1100 for Kc transmission is a content available for viewing under the tier contract or a content which requires a PPV contract and is available for viewing by performing another purchase. In the embodiment of the present invention, the following explanation is made by defining the tier contract as "TIERCONT" and the PPV contract as "PPVCONT".

The license transformation period 1106 shows a period for a process, in the IC card 103, of transforming the ECM 1100 for Kc transmission and obtaining a license for the stored viewing. The license transformation is a process of generating a license for the stored viewing through format transformation using the information included in the ECM 1100 for Kc transmission. After the transformation period, a license necessary for the stored viewing cannot be obtained from the ECM 1100 for Kc transmission so that it is necessary to obtain the information by using another communication and the like after the license transformation period 1106.

The license ID 1107 is a code for uniquely identifying the transformed license in the content distribution system 1, and is also used as a transformation log of the license in the IC card 103.

The license validity period 1108 shows a period during which the content can be viewed by the license.

The content key Kc 1109 is an encryption key having a length of 16 bytes assigned per content, and is an encryption key included in the license.

The use permission count 1110 indicates the number of times that the content can be viewed by the license.

The writing permission count 111 indicates the number of times that the content can be written on a storage medium by the license.

Note that, the format of the ECM-Kc 1000 for real time viewing encrypted with the work key Kw 203 is the same as the format of the ECM-Kc 1020 for stored viewing encrypted with the content key Ks 205, while an encryption key for performing an encryption (the work key Kw 203 and the content key Ks 205), section identification information (table ID, table ID extension, etc.) described in the section header 1001, a PID of TS packets (Packet ID) and the like are different.

Further, a problem that a large number of licenses is obtained in a short term including past licenses stored in other than the viewing contract period can be solved by storing the large number of contents and licenses in the terminal apparatus 102 by setting the license transformation period 1106 in addition to the license validity period 1108 and making a short term viewing contract. In this case, the license change period 1106 is preferred to be set at a relatively short period. Also, in order to do so, it is not necessarily to set the license transformation period 1106 for each license (ECM for Kc transmission), and the IC card 103 and the like may be held the license transformation period 1106 previously as a system fixed value.

In the above, the detailed explanations about the data structures of the ECM-Kw 1000, the ECM-Kc 1020, and the ECM 1100 for Kc transmission are described with reference to FIG. 10 and FIG. 11.

The ECM encrypting unit 311 is a unit which encrypts the ECM generated by the ECM generating unit 310 using an AES and the like. Specifically, the ECM encrypting unit 311 encrypts, using the work key Kw 203 obtained from the work key DB 302, the ECM-Kw 1000 and ECM 1100 for Kc transmission generated by the ECM generating unit 310. Also, the ECM-Kc 1020 generated by the ECM generating unit 310 is encrypted with the content key Kc 205 obtained from the content key DB 304. For encrypting each ECM, the CBC + OFB is used for the encryption mode. The ECM encrypting unit 311 transmits such encrypted ECM to the multiplexing unit 313.

The content coding unit 312 reads out a content to be transmitted to the terminal apparatus 102 from the content DB 305, and codes the content in a MPEG format.

Specifically, the content coding unit 312 is a real time encoder which generates an MPEG stream. It generates an Elementary Stream (ES) of the MPEG-2 or the MPEG-4 including video, audio, data and the like by reading out the video and audio from the content DB 305 according to an instruction from the upper system (e.g. a program operating management system, etc.). Further, it generates a Packetized Elementary Stream (PES) including the ES, performs the MPEG-2 TS packetization, and transmits the packetized stream to the multiplexing unit 313.

The multiplexing unit 313 multiplexes a transport stream including the video, audio and data received from the content coding unit 312, a transport stream of the ECM received from the ECM encrypting unit 311, and a transport stream of the EMM 900 received from the EMM encrypting unit 309, and transmits the multiplexed transport stream to the content encrypting unit 314. Specifically, the multiplexing unit 313 multiplexes the TS-packetized content received from the content coding unit 312, the TS-packetized ECM-Kw 1000, the ECM-Kc 1020, and the ECM 1000 for Kc transmission that are received from the ECM encrypting unit 311, and the TS-packetized EMM 900 received from the EMM encrypting unit 309, and generates a multiplexed transport stream for transmitting to the terminal apparatus 102.

The content encrypting unit 314 is a unit which scrambles a content by encrypting the content using the AES and the like. Specifically, the content encrypting unit 314 encrypts (scrambles) the payload portion of the TS packets other than an adaptation field using the scramble key Ks 201 obtained from the ECM generating unit 310 by the CBC + OFB mode.

The content transmitting unit 315 is a unit which transmits the TS packets encrypted by the content encrypting unit 314 to the terminal apparatus 102. Specifically, the content transmitting unit 315 transmits the transport stream received from the content encrypting unit 314 to the terminal apparatus 102 via the network 103 as a broadcast wave.

Note that, while the content stored in the content DB 305 is read out and real-time encoded by the content coding unit 312, the encoding process by the content coding unit 312 may be omitted when transmitting the content by generating a PES (ES) or a TS off line, in advance, and storing the generated PES (ES) or the TS in the content DB 305.

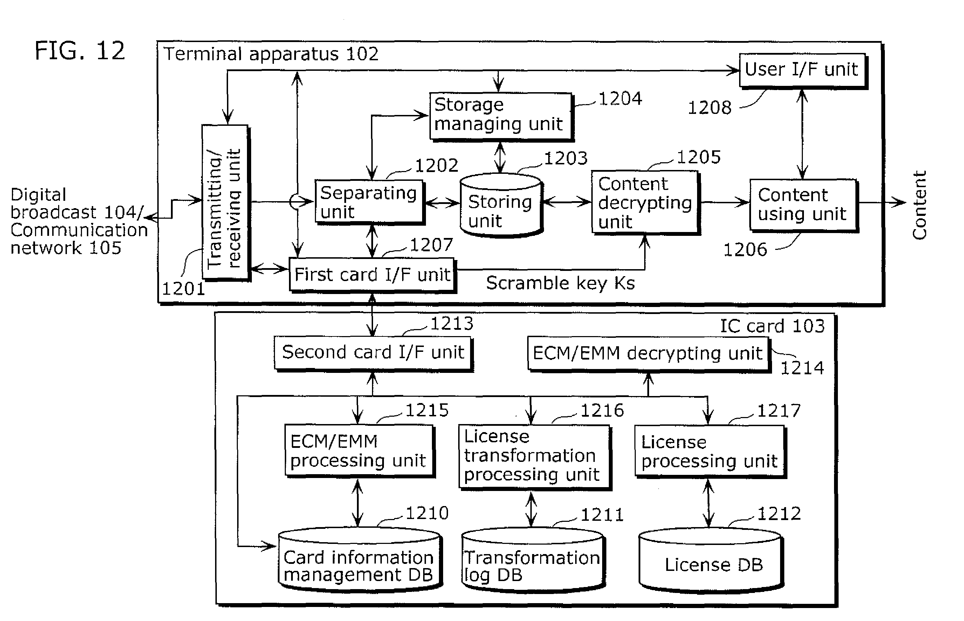

In the above, the structure of the broadcast station 101 is described in detail with reference to FIG. 3 to FIG. 11.
On the other hand, FIG. 12 is a functional block diagram showing structures of the terminal apparatus and the IC card 103 that are shown in FIG. 1.

First, the functional block configuring the terminal apparatus 102 is explained.
A transmitting/receiving unit 1201 is a processing unit for receiving a content and a license from the broadcast station 101 and communicating with the broadcast station 101, through the digital broadcast 104 and the communication network 105.

A separating unit 1202 obtains the encrypted content multiplexed by the MPEG-2 TS, and separates the content, ECM and the like.

Specifically, the separating unit 1202, by referring to the PSI information such as a Program Association Table (PAT), a Program Map Table (PMT) included in the transport stream received by the transmitting/receiving unit 1201, obtains a PID of the TS packets including content's video, audio and data, ECM-Kw 1000, ECM-Kc 1020, and ECM 1100 for Kc transmission, and separates the content, the ECM-Kc 1020 and the like. In the case where the content is stored in a content storing unit 1203, it generates PSI information such as a Selection Information Table (SIT) and a Discontinuity Information Table (DIT) by selecting from the PSI information such as PAT and PMT, and generates a stream called partial transport stream (hereafter referred to as partial TS) from the received transport stream.

The storing unit 1203 is a unit for storing contents and licenses. Specifically, the storing unit 1203 is a mass storage nonvolatile recording medium such as a HDD, and holds the partial TS including a content such as video and audio, and a license such as ECM-Kc 1020 that are generated from the transport stream received by the separating unit 1202.

A storage managing unit 1204 manages the contents and licenses stored in the storing unit 1203 of the terminal apparatus 102 and has information for presenting a user a list of stored contents and licenses.

A content decrypting unit 1205 is a unit which decrypts the encrypted content. Specifically, the content decrypting unit 1205 obtains the content of the encrypted MPEG-2 TS content, and obtains TS packets including the content's video, audio and data by referring to the PSI information such as PAT and PMT included in the transport stream. It then decrypts the payload portion of the TS packets that is encrypted using the AES with the scramble key Ks 201 obtained from the IC card 103.

The content using unit 1206 is a unit for securely using the content with the scramble key Ks 201 obtained from the IC card 103 and the use condition of the content.

Specifically, the content using unit 1206 obtains the TS packets of the ECM-Kw 1000 from the transport stream received from the separating unit 1202, at the time of real-time viewing, and reconfigures the ECM-Kw 1000. Such obtained ECM-Kw 1000 is decrypted with the work key Kw 203, the scramble key Ks 201 for de-scrambling the content is obtained, and the content is decrypted. On the other hand, at the time of stored viewing, the content using unit 1206 decrypts the ECM 1100 for Kc transmission with the work key Kw 203, from the transport stream read out from the storing unit 1203, and obtains a license. After a use condition included in the license is judged, only in the case where the content can be used, the ECM-Kc 1020 is decrypted using the content key Kc 205 included in the license, and obtains the scramble key Ks 201. Further, the content using unit 1206, using a secure timing unit that is not shown in FIG. 12, clocks the use time of the content, and controls the use of content based on the use condition. Under such control, the content using unit 1206 decodes the ES such as the MPEG-2 or MPEG-4 video, audio and data, an outputs the decoded ES to a monitor that is not shown in FIG. 12.

Note that, after the content use is finished, the content using unit 1206 may notify the IC card 103 of a use termination notification.

A first card I/F unit 1207 in the terminal apparatus 102 is a unit for providing an interface between the terminal apparatus 102 and the IC card 103.

Specifically, the first card I/F unit 1207 provides a unit for processing a T=0 protocol and a T=1 protocol defined in ISO7816-4 and mutually communicating data among the terminal apparatus 102, the IC card 103 and other functional blocks. The communication between the terminal apparatus 102 and the IC card 103 is performed after establishing a Secure Authenticated Channel (SAC) by performing mutual authentication between the terminal apparatus 102 and the IC card 103 at least for receiving information which requires secured communication, in order to prevent a hearing of the communication by a malicious user and the like.

A user I/F unit 1208 is a unit for providing an interface between the terminal apparatus 102 and the user.

Specifically, the user I/F unit 1208 is a Graphical User Interface (GUI) such as a Broadcasting Markup Language (BML) browser, a Web browser, and a resident application. It receives a user's request and presents a message to the user, through a monitor and the like that are not shown in FIG. 12.

In the above, the functional block of configuring the terminal apparatus 102 is explained.
Next, a functional block of configuring the IC card 103 is explained.

A card information management DB 1210 is a database for managing information relating to a user's viewing contract of a content. Specifically, the card information management DB 1210 includes a common information table 1300 which manages information relating to the viewing contract common to all providers, and a provider specific information table 1400 which manages information relating to a viewing contract for each provider.

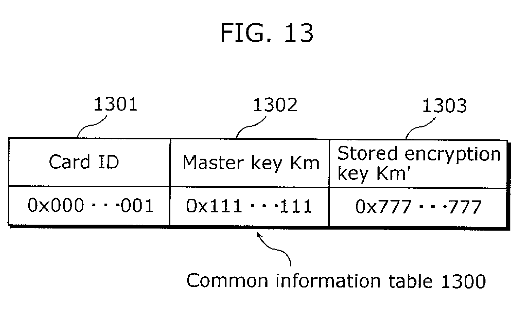

The common information table 1300 of the card information management DB 1210, as shown in FIG. 13, manages a card ID 1301, a master key Km 1302 and a stored encryption key Km' 1303.

The card ID 1301 is an ID for uniquely identifying the IC card 103 in the content distribution system 1, is previously written in the IC card 103, and is shipped.

The master key Km 1302 is an encryption key unique to the card ID 1301 used for encrypting the EMM 900. It is previously written in the IC card 103 and shipped as in the case of the card ID 1301.

The stored encryption key Km' 1303 is an encryption key for binding a license to the IC card 103 that has obtained the license and is an ID assigned to the provider ID 903 of the EMM 900, in the case where the license is stored in the storing unit 1203 of the terminal apparatus 102.

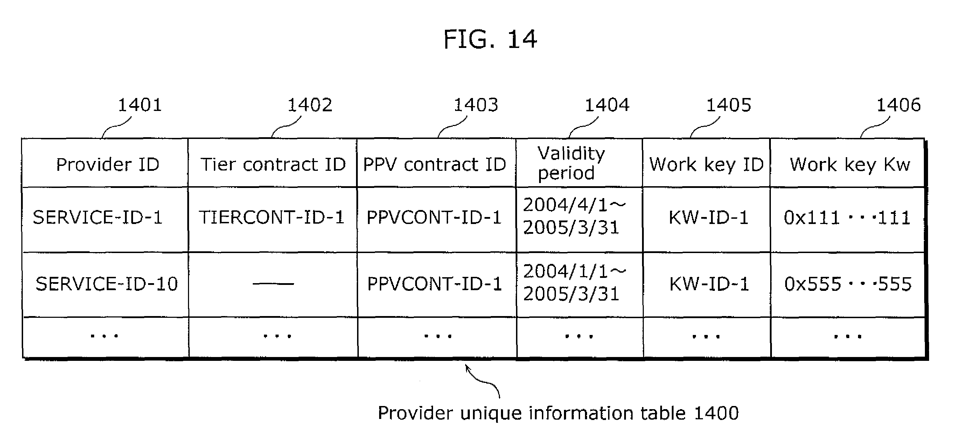

On the other hand, a provider unique information table 1400 in the card information management DB 1210, as shown in FIG. 14, manages a provider ID 1401, a tier contract ID 1402, a PPV contract ID 1403, a validity period 1404, a work key ID 1405 and a work key Kw 1406.

The provider ID 1401 is an ID for uniquely identifying a broadcast station 101 in the content distribution system 1, and the ID specified by the provider ID 903 of the EMM 900.

The tier contract ID 1402 is an ID of a service for which a user made a monthly contract with the broadcast station 101 to view a content, and the ID specified by the tier contract ID 908 of the EMM 900.

The PPV contract ID 1403 is an ID of a service for which the user made a contract with the broadcast station 101 for a PVV content, and the ID specified by the PPV contract ID 909 of the EMM 900.

The validity period 1404 indicates a viewing period defined by the viewing contract with the broadcast station 101, and the validity period specified by the validity period 904 of the EMM 900.

The work key ID 1405 is an ID for uniquely identifying the work key Kw 203 distributed from the broadcast station 101 in the content distribution system, and the ID specified by the work key ID 905 of the EMM 900. However, it should be noted that, with the pair of the provider ID 1401 and the work key ID 1405, the identification of the work key 203 becomes unique in the content distribution system 1.

The work key Kw 1406 is a work key Kw 203 distributed from the broadcast station 101, and is a bit string of 16 bytes specified by the work key Kw 906 of the EMM 900.

For example, in FIG. 14, the contract details agreed with a provider whose provider ID 1401 is "SERVICE-ID-1" indicate the following: the tier contract ID 1402 is "TIERCONT-ID-1"; the PPV contract ID 1403 is "PPVCONT-ID-1"; the validity period 1404 is "2004/4/1~2005/3/31"; the work key ID 1405 is "KW-ID-1"; and the work key Kw 1406 is "0x111...111". The details of the contract with the provider of "SERVICE-ID-1" indicate that both the tier content (a content whose service type 1104 of the ECM 1100 for Kc transmission is "TIERCONT") and the PPV content (a content whose service type 1103 of the ECM 1100 for Kc transmission is "PPVCONT") can be viewed. Also, the provider whose provider ID 1401 is "SERVICE-ID-10" has the tier contract ID 1402 of " - (no contract has been made)" and the PPV contract ID 1403 of "PPVCONT-ID-1". Therefore, the details of the contract with the provider of "SERVICE-ID-1" indicate that the tier content cannot be viewed while the PPV content can be viewed by performing another purchase.

Note that, while the example that the latest pair is held as the pair of the work key ID 1405 and the work key 1406 is explained in the above, in the provider unique information table 1400, it is desired to hold at least two pairs of work keys so as to perform smooth transition of switching an operation of the work key.

The transformation log DB 1211 is a database for storing transformation historical log of a license. Specifically, the transformation log DB 1211 holds a transformation log (hereafter referred to as TL) indicating that a transformation of a license (hereafter referred to as license transformation) has been performed, in order to prevent the license for stored viewing from being unlimitedly transformed from the information included in the ECM 1100 for Kc transmission.

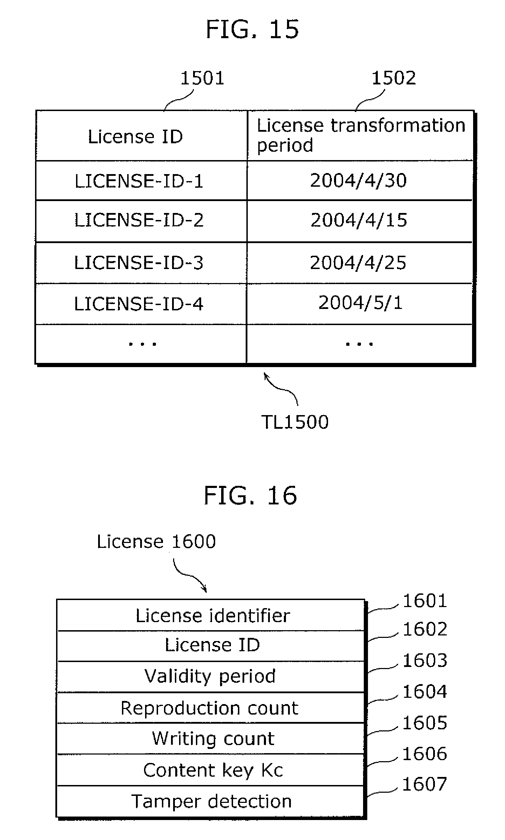

Here, an example of a data structure of a TL stored in the transformation log DB 1211 is explained with reference to FIG. 15.

A TL 1500 is made up of a pair of a license ID 1501 for identifying a license that has been transformed and a license transformation validity period 1502 indicating a period of time during which the license transformation can be performed, and manages a plurality of such pairs as a list. Each record of the TL 1500 is kept at least until the end of the license transformation validity period 1502. Therefore, further license transformation of the license which has been transformed once can be restrained. Consequently, only one license can be obtained from one ECM 1100 for Kc transmission so that a provider's right can be securely protected.

The license DB 1212 is a data base for securely managing the license obtained from the broadcast station 101. Specifically, while the license DB 1212 stores and manages the license obtained from the broadcast station 101, it manages a hash value of the license in the license DB 1212 in order to prevent unauthorized operation such as tamper of the license, in the case of storing the license into the outside of the IC card 103 such as a storing unit 1203 of the terminal apparatus 102.

A second card I/F unit 1213 is a functional block that is same as the first card I/F unit 1207 in the terminal apparatus 102. Therefore, the same explanation is omitted in here.

An ECM/EMM decrypting unit 1214 is a unit for decrypting the encrypted ECM and encrypted EMM 900 that are received from the terminal apparatus 102. Specifically, the ECM/EMM decrypting unit 1214 receives the encrypted ECM-Kw 1000, encrypted ECM-Kc 1020, and encrypted EMM 900 from the second card I/F unit 1213, reads out respectively, from the card management information DB 1210, a corresponding work key Kw 203 (1406) and a corresponding master key Km 207 (1302). Also, it receives a content key Kc 205 from the license stored in the license DB 1212, and decrypts the encrypted ECM-Kw 1000, encrypted ECM-Kc 1020, ECM 1100 for Kc transmission, and encrypted EMM 900.

An ECM/EMM processing unit 1215 is a unit for extracting necessary information from the ECM and EMM that are plain texts and for processing them. Specifically, the ECM/EMM processing unit 1215 interprets the ECM-Kw 1000, ECM-Kc 1020, ECM 1100 for Kc transmission, and EMM 900 that are received from the ECM/EMM decrypting unit 1214, and extracts and records information necessary for establishing the card management information DB 1210, or extracts a scramble key Ks 201 necessary for the terminal apparatus 102 to reproduce a content, from the ECM-Kw 1000 and ECM-Kc 1020, and sends back to the terminal apparatus 102 as a response.

A license transformation processing unit 1216 is a unit which transforms information (or license itself) included in the ECM and the like received from the broadcast station 101 into a license for controlling the use of the stored content, and manages the number of the transformed licenses. In details, the license transformation processing unit 1216 transforms the information included in the ECM 1100 for the Kc transmission obtained from the broadcast station 101 into a format of a license for stored viewing shown in FIG. 16, generates and manages a TL 1500 that is a transformation historical log for managing a license ID and a validity period of the transformed license.

Here, an example of a structure of a license to be transformed by the license transformation processing unit 1216 is explained with reference to FIG. 16.

A license 1600 is information which allows a use of a content, and includes a license identifier 1601, a license ID 1602, a validity period 1603, a reproduction count 1604, a writing count 1605, a content key Kc 1606, and a tamper detection 1607 for detecting a tamper of the license 1600.

The license identifier 1601 is an identifier for identifying a license that can be used in the content distribution system 1. For example, it is an identifier such as "SV-DRM LICENSE" and the identifier which is previously stored in the license transformation processing unit 1216.

The license ID 1602 is an identifier for uniquely identifying a license in the content distribution system 1. The value of the license validity period 1108 of the ECM 1100 for Kc transmission is assigned to the license ID 1602.

The validity period 1603 shows a period of time during which the license 1600 can be used, and has a use starting date and use ending date. The value of the license validity period 1108 of the ECM 1100 for Kc transmission is assigned to the validity period 1603.

The reproduction count 1604 indicates the number of times that the content can be reproduced. When the reproduction count is more than 0, a reproduction can be performed. The value of the use permission count 1110 of the ECM 1100 for Kc transmission is assigned to the reproduction count 1604.

The writing count 1605 indicates the number of times that the content is duplicated to a recording medium such as a Digital Versatile Disc (DVD) and a Blu-Ray Disc (BD). The value of the writing permission count 1111 of the ECM 1100 for Kc transmission is assigned to the writing count 1605.

A content key Kc 1606 is a content key Kc 205 for decrypting the ECM-Kc 1020. The content key Kc 205 is set as a binary value and is used for decrypting the ECM-Kc 1020. The value of the content key Kc 1109 of the ECM 1100 for Kc transmission is assigned to the content key Kc 1606.

The tamper detection 1607 is performed for detecting a tamper and securing the validity of a region in the case where the license 1600 is stored in the non-secure region such as a hard disk. In the tamper detection, a hash value of a portion (typically, the license identifier 1601 to the content key Kc 1606) where a tamper of the license 1600 needs to be prevented is calculated, and the calculation result is managed. This hash value is managed in the IC card 103 whose hardware is anti-tampered. As a hash algorithm, for example, there are a Secure Hash Algorithm 1 (SHA-1), a SHA-256 and the like. Also, in the case where the license 1600 is stored in a non-secure region such as a hard disk, at least a portion of the content key Kc 1606 is encrypted and stored.

In the above, the structure of the license 1600 in the content distribution system 1 is explained with reference to FIG. 16.

The license processing unit 1217 securely judges whether or not the content can be used based on the license.

Specifically, the license processing unit 1217 judges whether or not the content can be used based on the use condition included in the license obtained from the broadcast station 101, in the case where the license processing unit 1217 receives a use request of the license from a user. It then performs processing of providing the content key Kc 205 for decrypting the ECM-Kc 1020 to the ECM/EMM decrypting unit 1214 only when the use condition permits use of the content.

For example, the license processing unit 1217 judges whether or not the content can be used by referring to the validity period 1603 set in the license 1600. By referring to the current time provided by a secure timing unit that is included in the terminal apparatus 102 and not shown in FIG. 12, the license processing unit 1217 judges that the content can be reproduced when the current time is within the validity period 1603.

In the above, the detailed structures of the terminal apparatus 102 and the IC card 103 are explained with reference to FIG. 12 to FIG. 16.

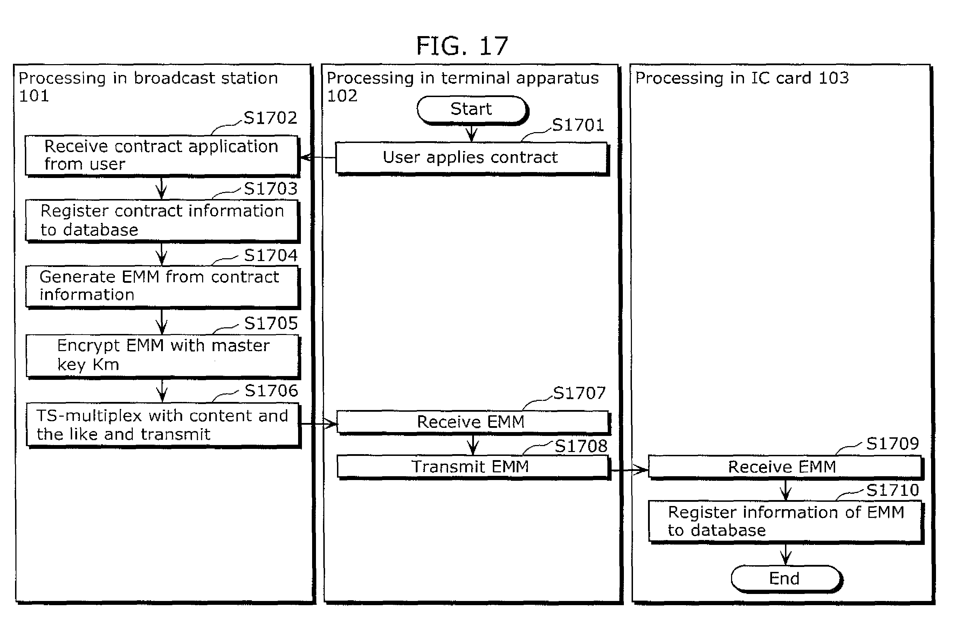

Here, there is provided an explanation of the following operation with reference to flowcharts shown in FIG. 17 to FIG. 22. In the terminal apparatus 102 and the IC card 103 configured as described above, a user makes a viewing contract with the broadcast station 101, obtains a content and a license from a distributing device of the broadcast station 101, stores them into the terminal apparatus 102, and uses the content in the terminal apparatus 102.

Note that, in the flowcharts shown in FIG. 17 to FIG. 22, it is necessary to purchase a content when the user uses a PPV content. However, this process is not the main focus of the present invention so that the explanation about the process is omitted herein.

First, an operation by a user to make a viewing contract with the broadcast station 101 in the terminal apparatus 102 is explained with reference to FIG. 17.

First, in the terminal apparatus 102, the user makes a viewing contract with the broadcast station 101 by a GUI provided by the user I/F unit 1208 (step S1701).

Specifically, when the user selects a desired contract from the tier contract provided by the broadcast station 101 or a viewing contract of the PPV contract, by the GUI provided by the user I/F unit 1208, the user I/F unit 1208 transmits an ID for identifying a corresponding contract (hereafter referred to as a contract ID) to a transmitting/receiving unit 1201 together with the card ID 1301 of the IC card 103. The transmitting/receiving unit 1201 establishes a SAC with the broadcast station 101 using a Secure Sockets layer (SSL), and transmits the received contract ID and card ID 1301 to the broadcast station 101. Note that, it is assumed that the user I/F unit 1208 has already obtained the contract ID from a Web browser and the like. In addition, it is also assumed that the card ID 1301 has already been obtained in the case of inserting the IC card 103.

The broadcast station 101 receives an application for a viewing contract from the terminal apparatus 102 (step S1702).

Specifically, the communication unit 306 of the broadcast station 101 receives a contract ID and the like from the terminal apparatus 102 and passes the contract ID to the contract processing unit 307.

The broadcast station 101 performs contract processing based on the contract ID received from the terminal apparatus 102, and registers information relating to the contract of the user in a database (step S1703).

Specifically, the contract processing unit 307 performs charging using a credit card number and a bank account number if necessary, and registers viewing contract information of the user in the contract information management DB 301. Herein, the contract processing unit 307 generates a stored encryption key Km' 305 unique to the IC card 103, and registers it in the contract information management DB 301 together with the master key Km 306 unique to the IC card 103.

Note that, it is assumed that the master key Km 306 unique to each IC card 103 has been obtained previously from a key management center and the like.

The EMM generating unit 308 of the broadcast station 101 generates an EMM 900 for the user who made a viewing contract (step S1704).

Specifically, the EMM generating unit 308 extracts, from the contract information management table 400 of the contract information management DB 301, the tier contract ID 402 to the stored encryption key Km' 405 of the card ID 401 which should transmit the EMM 900, based on an EMM transmission instruction such as whenever necessary or once in a day from an upper system such as a client management system, and generates an EMM 900 for the corresponding card ID 401. The EMM generating unit 308 transmits the generated EMM 900 to the EMM encrypting unit 309.

The EMM encrypting unit 309 of the broadcast station 101 encrypts the EMM 900 with the master key corresponding to the generated EMM 900 (step S1705).

Specifically, the EMM encrypting unit 309 reads out a master key Km 406 of the IC card 103 which has a matching card ID to the card ID 401 from the contract information management table 400 of the contract information management DB 301, by referring to the card ID 902 of the EMM 900 received from the EMM generating unit 308. The necessary portion of the EMM 900 is encrypted with the AES using this master key Km 406. The EMM encrypting unit 309 transmits the encrypted EMM 900 to a multiplexing unit 313.

The broadcast station 101 multiplexes the encrypted EMM 900 with the content and the like, and transmits to the terminal apparatus 102 (step S1706).

Specifically, the multiplexing unit 313 performs TS-packetization of the EMM 900 received from the EMM encrypting unit 309, and the content and the like received from the content coding unit 312 and the like, and multiplexing them into a transport stream.

The terminal apparatus 102 receives an EMM 900 addressed to itself (step S1707).
In details, the transmitting/receiving unit 1201 and separating unit 1202 of the terminal apparatus 102 perform filtering of the received EMM 900 using the card ID obtained previously from the IC card 103, and extract the EMM 900 addressed to itself.

A first card I/F unit 1207 of the terminal apparatus 102 transmits the received EMM 900 to the IC card 103 (step S1708).

A second card I/F unit 1213 of the IC card 103 receives the EMM 900 from the first card I/F unit of the terminal apparatus 102 (step S1709).

The IC card 103 manages, within the IC card 103, information included in the EMM 900 (step S1710).

Specifically, the second card I/F unit 1213 transmits the EMM 900 received to the ECM/EMM decrypting unit 1214. The ECM/EMM decrypting unit 1214, after confirming that the card ID 902 of the EMM 900 matches a card ID held by the IC card 103 of itself, reads out a master key Km 1302 from a common information table 1300 of the card management information DB 1210, and decrypts the card ID 902 of the EMM 900. After the decryption, it confirms that the encrypted EMM 900 is correctly decrypted using the tamper detection 910 of the EMM 900. When a tamper is found, the process of the EMM 900 is interrupted. The ECM/EMM decrypting unit 1214 passes the decrypted EMM 900 to an ECM/EMM processing unit 1215. The ECM/EMM processing unit 1215 interprets the EMM 900 received, and stores necessary information into the card management information DB 1210, so that the common information table 1300 and the provider unique information table 1400 shown in FIG. 13 and FIG. 14 are constructed.

Note that, while an example where the terminal apparatus 102 applies a viewing contract to the broadcast station 101 via the communication network 105, it may apply the viewing contract by off-line means such as making a telephone call and sending a postcard.

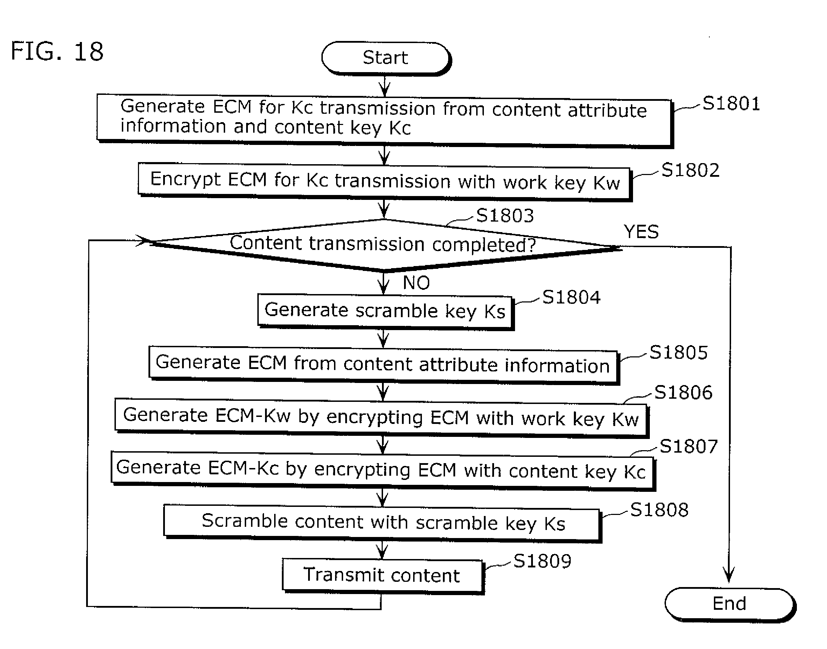

Next, it is explained about an operation of a transmission device in the broadcast station 101 to transmit a content with reference to the flowchart shown in FIG. 18.

First, the ECM generating unit 310 generates an ECM 1100 for Kc transmission prior to start transmitting the content, when a content transmitting instruction is received (step S1801).

Specifically, the ECM generating unit 310 reads out a license ID 602, a use condition 603 and a content key Kc 703 by referring to the content attribute information DB 303 and the content key DB 304, in order to generate the ECM 1100 for Kc transmission having an encryption key for each content using the content transmitting instruction from an upper system such as program operation management device, that is the ECM generation instruction as a trigger.

The ECM encrypting unit 311 encrypts the ECM 1100 for Kc transmission using the work key Kw 203 (step S1802).

Specifically, the ECM encrypting unit 311 specifies a work key Kw 203 that is currently used, with reference to a work key use starting date 503 in the work key management table 500 of the work key DB 302. It reads out the specified work key ID 501 and the work key Kw 502, and encrypts, using the AES in the CBC+OFB mode, a necessary portion of the ECM 1100 for Kc transmission received from the ECM generating unit 310. At the same time, the work key ID 501 is set for the work key ID 1104 of the ECM 1100 for Kc transmission. The ECM encrypting unit 311 transmits the encrypted ECM 1100 for Kc transmission to the multiplexing unit 313.

The content coding unit 312 starts reading and transmitting the content, and monitors whether or not the content has been completely transmitted while the content is being transmitted (step S1803).

Specifically, in step S1801, the content coding unit 312 receives an instruction that is same as the content transmitting instruction received by the ECM generating unit 310 from the upper system, reads out the content from the content management table 800 of the content DB 305, and generates a TS of the content by MPEG-encoding. The content coding unit 312 then reads out the content from the content DB 305 and monitors whether or not the content has been completely transmitted to the multiplexing unit 313, while transmitting the generated TS to the multiplexing unit 313.

In step S1803, in the case of NO, where the content has not been completely transmitted, the process of step S1804 is executed.

In step S1803, in the case of YES, where the content has been completely transmitted, this content transmission processing is terminated.

The ECM generating unit 310 generates a scramble key Ks 201 for scrambling the content following the start of content transmission (step 51804).

Specifically, the ECM generating unit 310 sequentially generates the scramble key Ks 201 that is updated every few seconds and transmits the generated scramble key Ks 201 to the content encrypting unit 314.

The ECM generating unit 310 generates an ECM from the content attribute information (step S1805).

Specifically, the ECM generating unit 310 reads out the contract information 604 and the like from the content attribute information management table 600 of the content attribute information DB 303 following the transmission of the content, and generates an ECM-Kw 1000 and an ECM-Kc 1020. The ECM generating unit 310 transmits the generated ECM-Kw 1000 and the ECM-Kc 1020 to the ECM encrypting unit 311.

The ECM encrypting unit 311 encrypts the ECM-Kw with the work key Kw 203 (step S1806).

Specifically, the ECM encrypting unit 311, in a method similar to the encryption of the ECM 1100 for Kc transmission using the work key Kw 203, specifies a currently used work key Kw 203 that is currently used, with reference to the work key use starting date 503 of the work key management table 500 of the work key DB 302, and encrypts, by the AES, the ECM-Kw 1000 using the work key Kw 502. The ECM encrypting unit 311 transmits the encrypted ECM-Kw 1000 to the multiplexing unit 313.

The ECM encrypting unit 311 encrypts the ECM-Kc using the content key Kc 205 (step S1806).

Specifically, the ECM encrypting unit 311 reads out a content key Kc 703 of a record matching the content ID 701 and license 702 of the content to be transmitted, with reference to the content key management table 700 of the content key DB 304. Here, it is assumed that the content ID and license ID of the content to be transmitted have been obtained already in the case where the content transmitting instruction is made from the upper system. The ECM encrypting unit 311 encrypts the necessary portion of the ECM 1100 for Kc transmission received from the ECM generating unit 310 using the AES in the CBC+OFB mode, with the read content key Kc 703. The ECM encrypting unit 311 transmits the encrypted ECM-Kc 1020 to the multiplexing unit 313.

The content encrypting unit 314 scrambles the TS into which the content and the ECM are multiplexed (step S1808).

Specifically, the content encrypting unit 314 selects TS packets of the content such as video, audio and data, from the TS into which the TS of the content, the TS of the ECM-Kw 1000, ECM-Kc 1020 and ECM 1100 for Kc transmission are multiplexed, and scrambles a payload portion of the TS packets in the CBC+OFB mode of the AES.

The content transmitting unit 315 transmits the encrypted TS (step S1809).
Specifically, the content transmitting unit 315 transmits the TS scrambled in the content encrypting unit 314 to the terminal apparatus 102 as broadcast waves.

Note that, while an example of transmitting the scramble key Ks 201, that is, the ECM-Kw 1000 and ECM-Kc 1020 together with the start of transmitting the content is explained, it is desired to multiplex and transmit the ECM-Kw 1000 and ECM-Kc 1020 prior to the start of the content transmission so that the content can be reliably descrambled from the head of the content.

Thus, the transmission processing of the content by the broadcast station 101 was described in detail in the above with reference to FIG. 18.

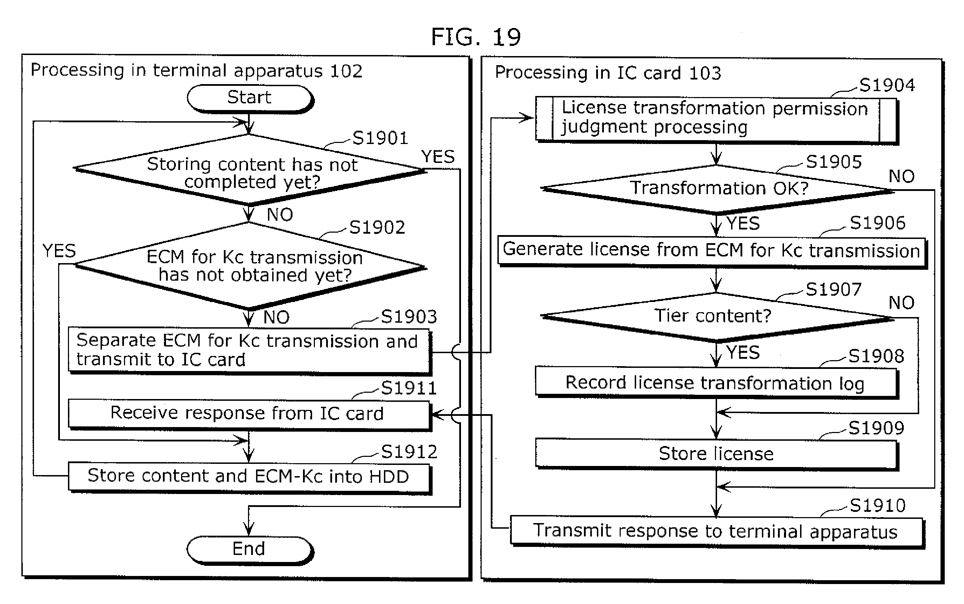

Next, the operation of the terminal apparatus 102 to receive the content through the digital broadcast 104 and to store the content into the storing unit 1203 is described using flowcharts and the like shown in FIG. 19 to FIG. 21.

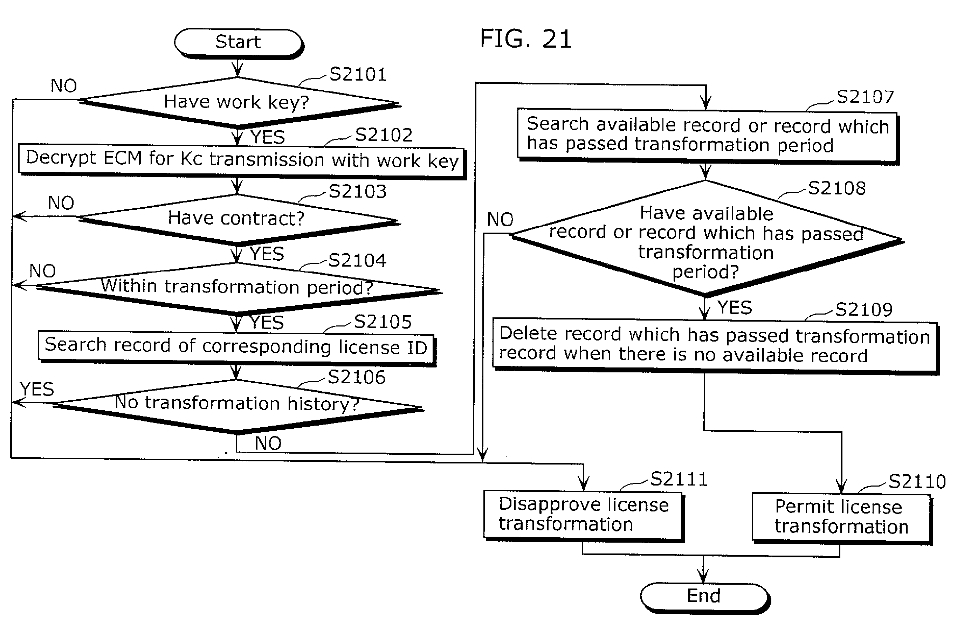

FIG. 19 is a flowchart showing a content reception and a license transformation respectively by the terminal apparatus 102 and the IC card 103. Note that a license transformation permission judgment processing in this processing in the IC card 103 is explained separately using the flowchart shown in FIG. 21.

The storage managing unit 1204 in the terminal apparatus 102 monitors a storage state of the content stored in the storing unit 1203, and checks whether or not the content storage has been finished (step S1901).

Specifically, the storage management unit 1204 tunes a server-type broadcast Type I content designated by a user, and sequentially stores the tuned content into the storing unit 1203 as a partial TS. During the storing, the storage management unit 1204 monitors whether or not the content has been stored already by referring to the Program Specific Information/ Service Information (PSI/SI) and the like.

In step S1901, in the case of NO where the content has not been completely stored, step 51902 is executed.

In step S1901, in the case of YES where the content has been completely stored, this content storing process is terminated.

The separating unit 1202 judges whether or not an ECM 1100 for Kc transmission has been obtained (step S1902).

Specifically, the separating unit 1202, with reference to a PAT, PMT and the like of the TS received, reconfigures the ECM 1100 for Kc transmission from the TS packets to which a PID of the ECM for Kc transmission is attached. For one content storing, it monitors whether or not an ECM 1100 for Kc transmission that needs to be obtained at least once has been obtained.

In step S1902, in the case of YES where the ECM 1100 for Kc transmission has not been obtained, step S1903 is executed.

In step S1902, in the case of YES where the ECM 1100 for Kc transmission has already been obtained, step S1912 is executed.

The separating unit 1202 separates the ECM for Kc transmission and sends it to the IC card 103 (step S1903).

Specifically, the separating unit 1202 obtains the ECM 1100 for Kc transmission reconfigured in the process of step S1902, and transmits the obtained ECM 1100 for Kc transmission to the IC card 103 via a first card I/F unit 1207.

The IC card 103 judges whether or not the received ECM 1100 for Kc transmission can be transformed (step S1904).

Specifically, a second card I/F unit 1213 of the IC card 103 receives the encrypted ECM 1100 for Kc transmission transmitted by the first card I/F unit 1207 of the terminal apparatus 102. After decrypting the encryption, a license transformation processing unit 1216 executes judging whether or not the license transformation processing can be performed using the transformation log DB 1211 stored in the IC card 103. Note that, the detail about a main license transformation permission judging is described later with reference to FIG. 21 so that the detailed explanation is not provided in here.

The license transformation processing unit 1216 of the IC card 103 checks whether or not a license transformation is permitted as the result of the license transformation permission judgment processing (step S1905).

In step S1905, in the case of YES where the license transformation is permitted, step 51906 is executed.

In step S1905, in the case of NO where the license transformation is not permitted, step S1910 is executed.

The license transformation processing unit 1216 transforms a license of the ECM 1100 for Kc transmission and generates a license 1600 for a stored viewing (step S1906).

Specifically, the license transformation processing unit 1216 obtains a license ID 1107 and license validity period 1108 included in the ECM 1100 for Kc transmission, and generates a license 1600 as shown in FIG. 16.

The license transformation processing unit 1216 judges whether or not the transformed license is a tier content or a PPV content (step S1907).

Specifically, the license transformation processing unit 1216, with reference to a service type 1103 of the ECM 1100 for Kc transmission, judges whether or not the service type 1103 is a "TEIRCONT" that is a tier content or a "PPVCONT" that is a PPV content.

In step S1907, in the case of YES, in the case of the tier content, the license transformation processing unit 1216 executes step S1908.

In step S1907, in the case of NO, in the case of the PPV content, step 51909 is executed without executing step 51908 because there is no need of recording the license transformation log. However, since the license 1600 of the PPV content is a license which can be used after the purchase, it is necessary to perform, soon after the license is transformed, a process of holding a flag indicating that the license has not been purchased together with the license 1600 and of deleting the flag after the purchase.

The license transformation processing unit 1216 records the transformation log of the current license (step S1908).

Specifically, the license transformation processing unit 1216 adds the license ID 1107 of the ECM 1100 for Kc transmission and the license transformation validity period 1106 to the license ID 1501 and license transformation validity period 1502 of the TL 1500 stored in the transformation log DB 1211.

The license processing unit 1217 stores the transformed license into the license DB 1212 (step S1900).

The second card I/F unit 1213 transmits, to the terminal apparatus 102, a response to a license transformation request by the ECM 1100 for Kc transmission (step S1910).

Specifically, the second card I/F unit 1213 generates a response message and transmits it to the terminal apparatus 102. The response message indicates that a license transformation of the content is permitted and the license transformation has been completed, or that the license transformation of the content has been failed.

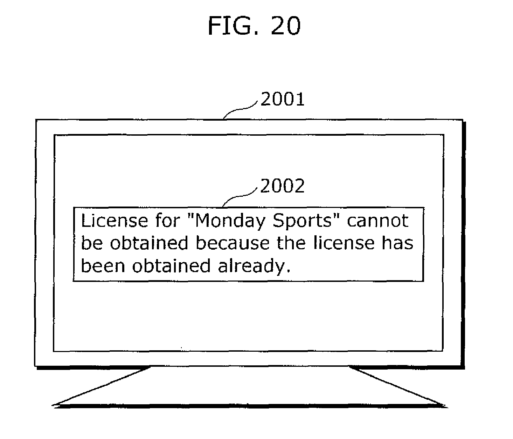

Note that, in step S1905, as in the case of NO where the license transformation of the content has not been permitted, the message as shown in FIG. 20 is presented to the user.

FIG. 20 is a diagram showing an example of a warning message presented to the user by the user I/F unit 1208. A message 2002 displayed to the monitor 2001 shows that the user has already transformed and obtained a license corresponding to a license ID of the content "Monday Sports" in the IC card 103, so that the user cannot obtain the license any more.

The first card I/F unit 1207 receives a response from the IC card 103 (step S1911).

Specifically, the first card I/F unit 1207 receives, from the second card I/F unit 1213 of the IC card 103, a response that is a license transformation result to the transmission of the ECM 1100 for Kc transmission.

The storage managing unit 1204 of the terminal apparatus 102 performs processing of storing the content into the storing unit 1203 (step S1912).

Specifically, the storage managing unit 1204 stores the SIT and DIT generated from the PMT and the like, while storing the TS packets such as a content, ECM-Kc 1020 and ECM 1100 for Kc transmission sequentially into the storing unit 1203. Note that, even in the case where the license transformation processing in the IC card 103 is failed for some reasons, the storing process of storing the content, ECM-Kc 1020, and the ECM 1100 for Kc transmission are continued so that the license transformation can be tried again later.

In the above, the content storing process by the terminal apparatus 102 was described with reference to FIG. 19.

Next, a license transformation permission judging processing by the IC card 103 is described in detail with reference to FIG. 21.

First, the ECM/EMM decrypting unit 1214 of the IC card judges whether or not there is a work key Kw 203 for decrypting the ECM 1100 for Kc transmission, with reference to the card management information DB 1210 (step S2101).

Specifically, the ECM/EMM decrypting unit 1214, with reference to a provider unique information table 1400 of the card management information DB 1210, searches for a record of a provider ID whose provider ID 1401 matches a provider ID 1102 of the ECM 1100 for Kc transmission, and reads out a work key Kw 1406. Herein, in the case where the current date obtained together with the ECM 1100 for Kc transmission from the terminal apparatus 102 has passed the validity period 1404 or where the work key ID 1104 of the ECM 1100 for Kc transmission does not match the work key ID 1405 of the provider unique information table 1400, the ECM/EMM decrypting unit 1214 performs processing assuming that the work key Kw 203 does not exist.

In step S2101, in the case of YES where there is a work key Kw 1406, step 52102 is executed.

In step S2101, in the case of NO where there is no work key Kw 1406, step S2111 is executed.

The ECM/EMM decrypting unit 1214 decrypts the ECM 1100 for Kc transmission using the work key Kw 1406 (step S2102).

Specifically, the ECM/EMM decrypting unit 1214 decrypts the encryption portion of the ECM 1100 for Kc transmission by the AES, and checks whether or not the ECM 1100 for Kc transmission is tampered from the tamper detection 1110 of the ECM 1100 for Kc transmission. If it is detected that the ECM 1100 for Kc transmission is tampered, step S2111 is executed and this processing is terminated because the license transformation cannot be permitted (not shown in FIG. 21).

The ECM/EMM processing unit 1215 judges whether or not the IC card 103 has a contract for viewing the content (step S2103).

Specifically, the ECM/EMM processing unit 1215 compares the contract judgment information 1105 of the ECM 1100 for Kc transmission and a tier contract ID 1402 or a PPV contract ID 1403 in the provider unique information table 1400 of the card management information DB 1210, and judges which one of the mentioned IDs match.

In step S2103, in the case of YES where any of the IDs match, step S2104 is executed.

In step S2103, in the case of NO where none of the IDs match, step S2111 is executed.

The license transformation processing unit 1216 judges whether or not the ECM 1100 for Kc transmission is within a validity period for license transformation (step S2104).

Specifically, the license transformation processing unit 1216, with reference to the license transformation validity period 1106 of the ECM 1100 for Kc transmission, compares with the current date obtained from the terminal apparatus 102 together with the ECM 1100 for Kc transmission, and judges whether or not the ECM 1100 for Kc transmission is within the license transformation validity period.

In step S2104, in the case of YES where the license transformation validity period 1106 is after the current date, the license transformation processing unit 1216 judges that the current date is within the license transformation period, and step 52105 is executed.

In step S2104, in the case of NO where the license validity period 1106 is prior to the current date, the license transformation processing unit 1216 judges that the current date is out of the license transformation period, and step S2111 is executed.

The license transformation processing unit 1216 searches a transformation log of the license ID with reference to transformation log DB 1211 (step S2105).

Specifically, the license transformation processing unit 1216 searches for a record of the license ID 1501 which matches the license ID 1107 of the ECM 1100 for Kc transmission, with reference to the TL 1500 of the transformation log DB 1211.

The license transformation processing unit 1216 judges whether or not there is a transformation log of the current license ID (step S2106).

Specifically, the license transformation processing unit 1216 checks whether or not there is a record in which the license ID 1107 of the ECM 1100 for Kc transmission matches the license ID 1501 of the TL 1500, with reference to the search result from step 52105.

In step S2106, in the case of NO where there is no transformation log of the current license ID, step 52107 is executed.

In step S2106, in the case of YES where there is a transformation log of the license ID, step S2111 is executed.

The license transformation processing unit 1216 searches whether or not there is, in the TL 1500, an available record or a record in which a validity period has passed (step S2107).

Specifically, the license transformation processing unit 1216 searches for an available record with reference to TL 1500 in order to find a record into which an license ID for another license transformation is additionally described. In the case where there is no available record, the current time obtained together with the ECM 1100 for Kc transmission from the terminal apparatus 102 is compared with the license transformation validity period 1502 of the TL 1500, and a record having a license transformation validity period 1502 after the current time is searched.

The license transformation processing unit 1216 judges whether or not there is, in the transformation log DB 1211, an available record or a record which has passed the license validity period 1502 (step S2108).

Specifically, the license transformation processing unit 1216 judges whether or not there is, in the TL 1500, an available record or a record which has passed the license transformation validity period 1502, with reference to the search result from step S2107.

In step S2108, in the case of YES where there is an available record or a record which has passed the license transformation validity period 1502, step S2109 is executed.

In step S2108, in the case of NO where there is no available record nor the record which has passed the license transformation validity period 1502, step S2111 is executed because the license transformation cannot be executed any more.

The license transformation processing unit 1216 deletes the record which has passed the license transformation validity period 1502 in the case where there is no available record, based on the result judged in step S2108, so that a new license ID 1501 can be added (step S2109).

The license transformation processing unit 1216 judges that the transformation of the license of the ECM 1100 for Kc transmission can be permitted, and this license transformation permission judgment processing is terminated (step S2110).

The license transformation processing unit 1216 judges that the transformation of the license of the ECM 1100 for Kc transmission cannot be performed, and this license transformation permission judging processing is terminated (step S2111).

In the above, the details about the processes of the terminal apparatus 102 and the IC card 103 at the time of content storing were explained with reference to FIG. 19 to FIG. 21.

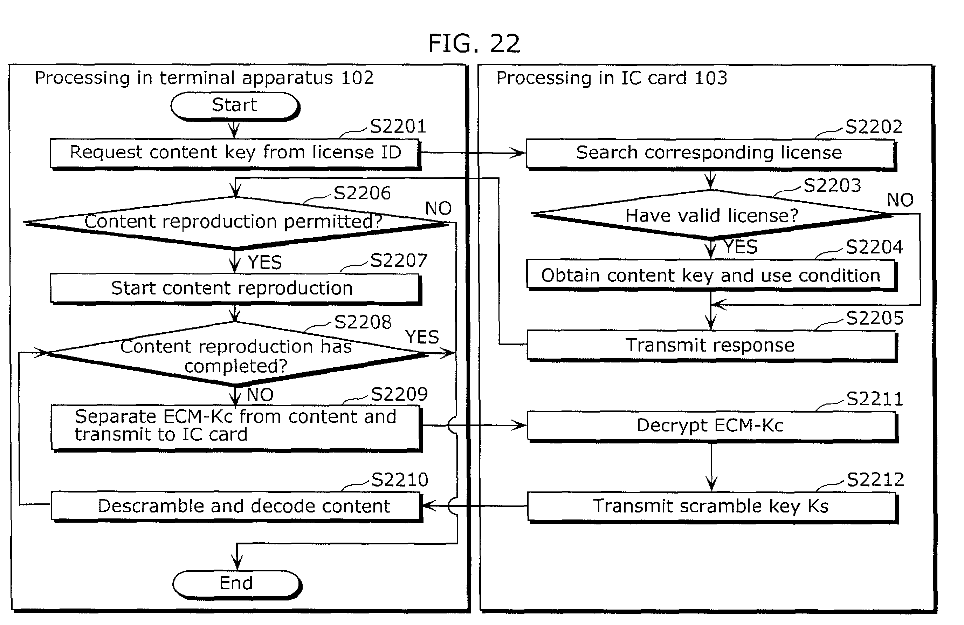

Lastly, it is explained about an operation by the terminal apparatus 102 to store and view the content in the storing unit 1203 with reference to a flowchart shown in FIG. 22.

First a license ID of the stored content that a user wishes to watch is designated, and the terminal apparatus 102 requests the IC card 103 of a content key (step S2201).

Specifically, the user I/F unit 1208 of the terminal apparatus 102 obtains, using metadata and the like, a license ID of a content that a user wants to reproduce, and transmits to the first card I/F unit 1207 in order to transmit the license ID to the IC card 103. The first card I/F unit 1207 transmits the received license ID to the IC card 103.

The IC card 103 searches for a license having the license ID from the license DB 1212 (step S2202).

Specifically, the second card I/F unit 1213 of the IC card 103 transmits the received license ID to the license processing unit 1217, and the license processing unit 1217 searches in the license DB 1212 using the license ID as a key.

The license processing unit 1217 judges whether or not there is an effective license matching with the requested license ID (step S2203).

In step S2203, in the case of YES where there is an effective license, step 52204 is executed.

In step S2203, in the case of NO where there is no effective license, step 52205 is executed because a reproduction cannot be performed.

The license processing unit 1217 obtains a content key and a use condition from the obtained license (step S2204).

Specifically, the license processing unit 1217 obtains, from the obtained license 1600, a content key Kc 1606, a validity period 1603, a reproduction count 1604, and a writing count 1605. First, with respect to the use condition of the content with the validity period 1603 to the writing count 1605, the license processing unit 1217 judges whether or not the license is valid comparing the validity period 1603 with the current time. Similarly, with respect to the reproduction count 1604 and the writing count 1605, the license processing unit 1217 judges whether or not the reproduction count 1604 is more than 0 with reference to the reproduction count 1604 since a user requests a reproduction of the content in here. In this use condition judgment, in the case where it is judged that the content can be used, the license processing unit 1217 transmits the content key Kc 1606 to the ECM/EMM decrypting unit 1214 in order to decrypt the encrypted ECM-Kc 1020 received from the terminal apparatus 102 by synchronizing with the content reproduction. The content key Kc 1606 is held in the ECM/EMM decrypting unit 1214 while the content is being reproduced.

The second card I/F unit 1213 transmits a response to the license processing result to the terminal apparatus 102 (step S2205).

Specifically, the second card I/F unit 1213 obtains results of a search for the current license by the license processing unit 1217 and of a use permission judgment of a license, and transmits the results as a response to the first card I/F unit 1207 of the terminal apparatus 102.

The first card I/F unit 1207 of the terminal apparatus 102 receives a response from the IC card 103, and transmits the response to the content decrypting unit 1205. The content decrypting unit 1205 then checks whether or not the content can be reproduced (step S2206).

In step S2206, in the case of YES where the content can be reproduced, step 52207 is executed.

In step S2206, in the case of NO where the content cannot be reproduced, this content use processing is terminated.

The storage managing unit 1204 reads out the content from the storing unit 1203. The content decrypting unit 1205 and the content use unit 1206 starts decrypting the encrypted content and decoding the content (step S2207).

The storage managing unit 1204 reads out all TS packets of the current content from the storing unit 1203, and judges whether or not the content reproduction has been completed (step S2208).

In step S2208, in the case of NO where the content has continued being reproduced, the step 52209 is executed.

In step S2208, in the case of YES where the content reproduction has completed being reproduced, this content reproduction processing is terminated.

Specifically, the separating unit 1202 obtains TS packets of a PID of the ECM-Kc 1020 from the current content, and reconfigures the ECM-Kc 1020. The reconfigured ECM-Kc 1020 is passed onto the first card I/F unit, and the first card I/F unit 1207 transmits the ECM-Kc 1020 to the IC card 103. Note that, since the scramble key Ks 201 included in the ECM-Kc 1020 is updated every few seconds, it is necessary to process the present step in a ratio of once in few seconds.

The IC card 103 decrypts the ECM-Kc 1020 received by the content key Kc 205 (step S2211).

Specifically, the second card I/F unit 1213 of the IC card 103 transmits the ECM-Kc 1020 received from the first card I/F unit 1207 of the terminal apparatus 102 to the ECM/EMM decrypting unit 1214. The ECM/EMM decrypting unit 1214 then decrypts the ECM-Kc 1020 using the held content key Kc 1606.

The IC card 103 transmits the scramble key Kc 201 obtained from the ECM-Kc 1020 to the terminal apparatus 102 (step S2212).

Specifically, the ECM/EMM processing unit 1215 of the IC card 103 obtains a scramble key Ks 201 from the decrypted ECM-Kc 1020, and transmits the scramble key Ks 201 to the terminal apparatus 102 through the second card I/F unit 1213. Note that, it may be judged whether or not the scramble key Kc 201 can be transmitted to the terminal apparatus 102 with reference to the use condition of the content set in the license 1600.

The content decrypting unit 1205 of the terminal apparatus 102 descrambles the content with the scramble key Ks 201 obtained from the IC card 103 and the content using unit 1206 decodes the content (step S2210).

Specifically, the content decrypting unit 1205 sequentially receives, from the first card I/F unit 1207, the scramble key Ks 201 obtained by the IC card 103, and the received scramble key Ks 201 is assigned to the content decrypting unit 1205. The encrypted TS packets read out from the storing unit 103 is descrambled using the scramble key Ks 201 and transmitted to the content using unit 1206. The content using unit 1206 decodes, in an MPEG format, the descrambled content received from the content decrypting unit 1205, and outputs the content to a monitor and the like that are not shown in the diagram.

Note that, based on the use conditions, the content decrypting unit 1205 or content using unit 1206 in the terminal apparatus 102, or the ECM/EMM decrypting unit 1214 and the like of the IC card 103 may perform use control of a content such as a validity period, an accumulated use time and the like. In this case, it is assumed that the license 1600 includes corresponding use conditions.

In the above, the content use processing in the terminal apparatus 102 and the IC card 103 was explained with reference to FIG. 22.

As described above, in the digital right management system applied to the content distribution system 1, an ID and validity period of the license obtained by the terminal apparatus are managed as obtainment log of the license, and the license obtainment log is kept at least during the obtainment validity period. Therefore, both an unlimited license obtainment and an increase of the data size to be managed can be prevented so that the rights of the provider can be efficiently protected.

Note that, in the embodiment of the present invention, information to be set for the license 1600 is distributed from the transmission device of the broadcast station 101 to the terminal apparatus 102 and the IC card 103 using an ECM 1100 for Kc transmission by a server type broadcast method. However, not limited to the above, the information can be set to the following and the like: an ECM-Kw 1000, ECM-Kc 1020, and EMM 900 by the server-type broadcast method; an EMM for Kc distribution; and Account Control Information (ACI) used for a Typell by the server-type broadcast method. In addition to the distribution of information to be set to the license 1600, the information can be distributed including a license whose format is different from the license 1600. Also, it can be considered that the ECM and the EMM are the licenses whose formats are different from the format of the license 1600.

Also, in the embodiment of the present invention, the license 1600 is stored inside the IC card 103. However, considering the case where a storage memory of the IC card 103 is not large, at least a portion of the license 1600 may be stored in the terminal apparatus 102.

In this case, encryption is necessary for securing the license 1600 generated by the license transformation. In this encryption, the license 1600 may be bound to the terminal apparatus 102, the IC card 103 or the group thereof using an encryption key that is different from the work key Kw 203 used for distribution, such as, for example, a master key Km 252 unique to the IC card 103, an encryption key (group key) that is previously shared among multiple terminal apparatuses 102, or the stored encryption key Km' 1303 shown in FIG. 13.

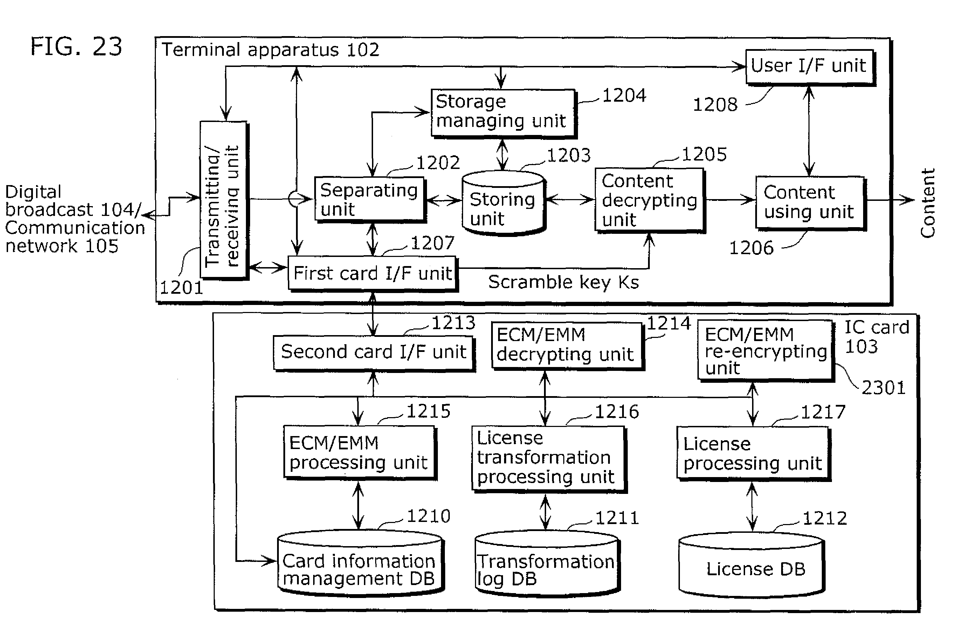

Also, the ECM 1100 for Kc transmission before the license transformation and the like may be directly stored in the storing unit 1203 of the terminal apparatus 102. Herein, they may be stored without encryption transformation, or the ECM for Kc transmission may be encryption-transformed as in the case of the license 1600 in order to be ready for a regular or irregular update processing of the work key Kw 203. Note that, in the case where the encryption transformation processing of the license is performed in the terminal apparatus 102 and the IC card 103, an ECM/EMM re-encrypting unit 2301 may be added inside the IC card 103 as shown in FIG. 23.

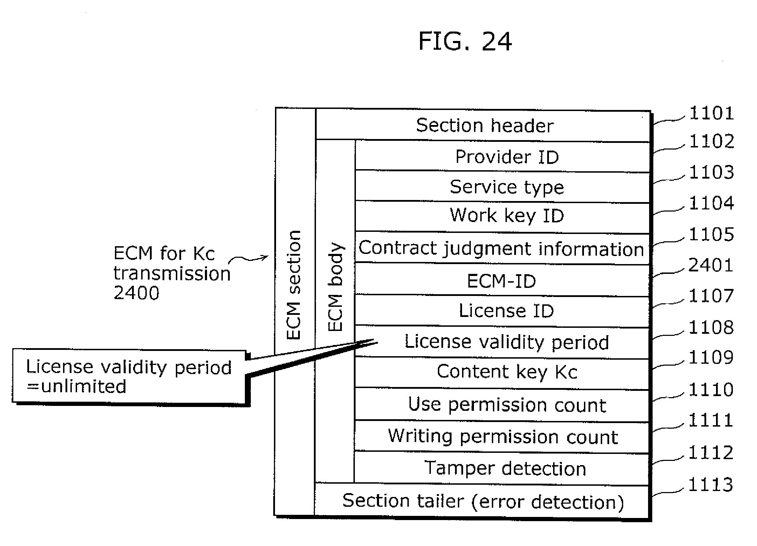

Further, while, in the embodiment of the present invention, an example of controlling the license transformation using the license ID 1501 in the TL 1500 that is a license transformation log is used, an ID (ECM-ID 2401) for identifying the ECM may be assigned to the ECM 2400 for Kc transmission as shown in FIG. 24. In this case, in the TL 1500, the license transformation can be controlled using the ECM-ID 2401 in place of the license ID 1501. However, the license transformation control is performed not for each license 1600 as a unit but for each ECM 1100 for Kc transmission. Or, in the TL 1500, the license transformation may be controlled using the ECM-ID 2401 together with the license ID 1501. In this case, an obtainer that has obtained the license 1600 can be identified even in the case where the licenses 1600 with the same license ID are respectively included in the differing ECM 1100 for Kc transmission (i.e. the same license is obtained from differing services), or in the case where the licenses 1600 with the same license ID are obtained through the communication network 105 and the like. Therefore, the following problem can be solved that the license transformation cannot be performed in the case where it is wished to obtain the same licenses from differing services. Further, these IDs are not limited to the above unless they are the information which can identify a license and an ECM 1100 for Kc transmission. Accordingly, a hash value of the license, a MAC, a URI and the like can be used.

Further, a relative date may be used, while an absolute date is used for the license transformation validity period 1106 of the ECM 1100 for Kc transmission (the license transformation validity period 1502 of the TL 1500) in the embodiment of the present invention. For example, the relative date may be a relative date from the license validity period 1108, a relative date from the date when the terminal apparatus 102 received the ECM 1100 for Kc transmission, and the like. Also, while only an end date during which the transformation is permitted is shown as an example, a starting date may be attached together with the end date.

Further, while there is provided an example, in the embodiment of the present invention, where the validity period 1603 is inevitably assigned to the license 1600, there is considered a case where the validity period 1603 (the license validity period 1108 of the ECM 2400 for Kc transmission) is unlimited like the ECM 2400 for Kc transmission as shown in FIG. 24 so that a license transformation validity period is not set for the ECM 2400 for Kc transmission. In such case, the license transformation processing unit 1216 of the IC card 103 may generate a license transformation validity period 1502 of the TL 1500. For generating the license transformation validity period 1502, there is a method of adding a predetermined period of time (e.g. one month) to a receiving date of the ECM 2400 for Kc transmission or a date when the license transformation is performed. With respect to the added value, while there is a method of holding the added value in the terminal apparatus 102 and the IC card 103 as a system fixed value, it may be changed dramatically by the broadcast station 101 through the digital broadcast 104, the communication network 105 and the like.

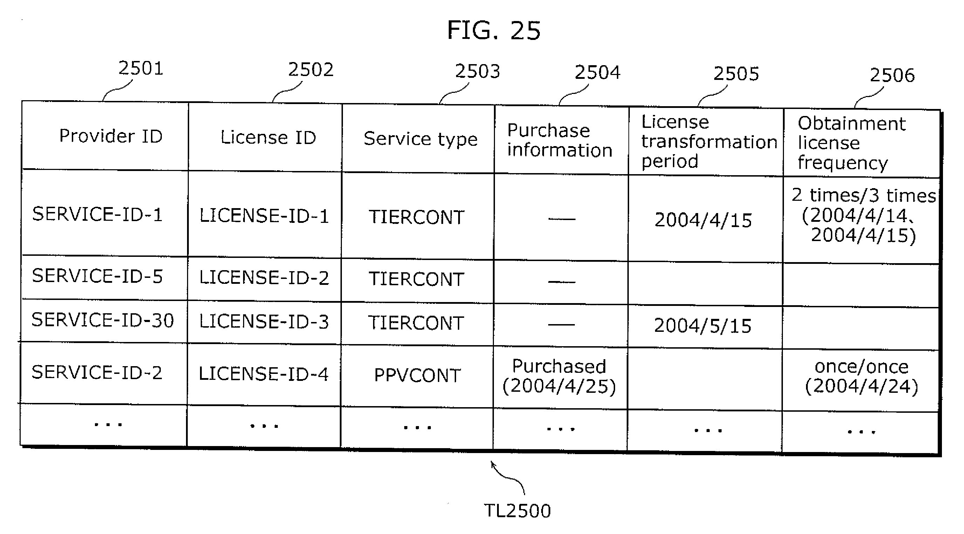

Further, while there is provided a case, in the embodiment of the present invention, where the license ID 1501 and the license transformation validity period 1502 are described in the TL 1500, a provider ID 2501, a service type 2503, purchase information 2504, and an obtained number of licenses 2506 may be described together in a TL 2500 as shown in FIG. 25. Accordingly, since the provider ID 2501 is described, a unique value for the license 2502 can be assigned for each provider. Further, since the service type 2503 is described, in addition to the license transformation log relating to a tier content, a license transformation log relating to a PPV content can be aggregately managed. A date when the PPV content is purchased is also described as purchase information 2504. Further, since the obtained number of licenses 2506 is described, in the case where the obtained number of licenses 2506 is pre-set as a system fixed value or the number of licenses that can be obtained by a user for one license (i.e. the number of licenses that can be duplicated), the number of licenses that can be obtained can be precisely controlled by recording the obtained number of licenses 2506. Further, not limited to the number of licenses that can be obtained, other conditions relating to license obtainment can be managed.

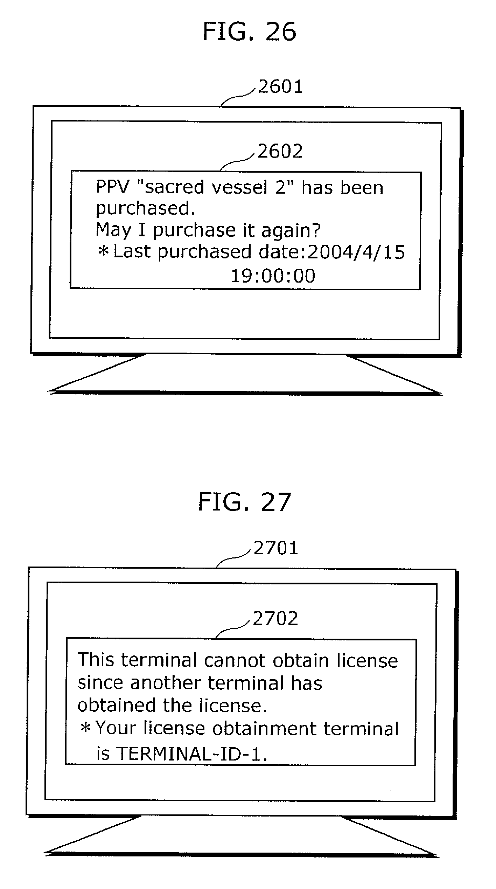

Note that, in the case where the aforementioned TL 2500 is used, a message as shown in FIG. 26 can be presented to the user when the same PPV content (PPV license) is purchased again using the service type 2503 and the purchase information 2504.

FIG. 26 is a diagram showing an example of a warning message presented to the user by the user I/F unit 1208. A message 2602 displayed on a monitor 2601 indicates a message for confirming the user about whether or not the same content can be purchased again since a license of a content called "sacred vessel 2" was purchased at 19:00:00 on April 15, 2004.

Note that, in the embodiment of the present invention, there is provided an example where the terminal apparatus 12 and the IC card 103 are bound by recording a terminal apparatus ID of the terminal apparatus 102 which has performed the license transformation processing for the first time. However, not limited to the above, a domain ID for identifying a group called domain that is made up of multiple terminal apparatuses 102 and IC cards 103 that can share the content and the license may be used in place of the terminal apparatus ID.

Further, there has been provided an example, in the embodiment of the present invention, where the license transformation validity period 1502 is inevitably managed in the TL 1500. However, with respect to the license transformation log of the license in which the license transformation validity period 1106 and the license validity period 1108 are not set in the ECM 1100 for Kc transmission, the license transformation log may be structured in a hybrid configuration by not managing it by time limit but by managing it using the number of records of the TL 1500, deleting older records first, and the like.

Also, there has been provided an example, in the embodiment of the present invention, where a decision of whether or not to add a record of the license transformation log to the TL 1500 is made with reference to the service type 1103 of the ECM 1100 for Kc transmission. However, the decision of whether or not to add the record may be made depending on whether or not the use condition of the content (such as a license validity period 1108, a use count 1110, and a writing count 111 although it is not limited to these) assigned to the ECM 1100 for Kc transmission has a state. Therefore, identification information about whether or not the license has a state may be set in the ECM 1100 for Kc transmission or in the license 1600. For example, there considered a method of adding, as a record, only the license whose use condition has a state and but not the license whose use condition does not have a state. Here, the use condition having a state is mainly the use condition relating to the counts restrictions such as the use count 1110 and the writing count 1111, while the use conditions having a state is mainly the validity period 1108 and the like.

Further, there has been explained, in the embodiment of the present invention, that the record whose license transformation validity period 1502 has been expired is deleted at the time of adding a record with a new license transformation log. However, the record whose license transformation validity period 1502 has been expired may be searched for and deleted at the time of searching and deleting, for every predetermined period of time, the record whose license transformation validity period 1502 has been expired, and receiving a specific command from the terminal apparatus 102 by the IC card 103. Also, the condition for deleting the record whose license transformation validity period 1502 has been expired may be dynamically updated from the broadcast station 101. Furthermore, it may be deleted in accordance with a user's instruction.

Moreover, while the TL 1500 is managed in the IC card 103 according to the embodiment of the present invention, at least a portion of the TL 1500 may be stored in the storing unit 1203 of the terminal apparatus 102, while taken a storage memory of the IC card 103 in consideration. Herein, in order to prevent unauthorized operation of the TL 1500 by a malicious user and the like, the hash value of the TL 1500 stored in the storing unit 1203 needs to be held in the IC card 103. Additionally, in the case where the TL 1500 is stored in the storing unit 1203 of a terminal apparatus 102 herein, there is a possibility that inconsistency is occurred in the number of licenses that a user can obtain when another terminal apparatus 109 obtains (transforms) a new license. Therefore, in the case where the TL 1500 is stored in the terminal apparatus 102, it is necessary to restrict the terminal apparatuses 102 that can obtain the licenses by holding, in the IC card 103, an ID for uniquely identifying the current terminal apparatus 102. Further, in order to prevent such problems, the terminal apparatuses 102 that can obtain a license may be restricted in advance by holding, in the IC card 103, an ID of the terminal apparatus 102 which has obtained the license at the first time.

Note that, as described above, in the case of restricting the terminal apparatuses 102 that can obtain a license, a message (2702) such as "this terminal cannot obtain a license because another terminal has already obtained the license" may be presented to the user as shown in FIG. 27. Additionally, an identifier of a terminal that can obtain a license (TERMINAL-ID-1 in FIG. 27) may be also presented. Furthermore, a message may be presented to the user when a license is transferred to another card, and the like.

Further, while the TL 1500 is managed per IC card 103 unit according to the embodiment of the present invention, the TL 1500 may be managed, in the IC card 103, per broadcast station 101 (provider). Also, the TL 1500 may be managed per multiple IC cards 103 (domain) by cooperating among the multiple IC cards 103.

Further, the TL 1500 that is a license transformation log can be transmitted to and used by the broadcast station 101, another terminal apparatus 102, and another IC card 103.

Further, in the case where, in the license transformation process of the IC card 103, only the TL 1500 is left before the license transformation is completed because of a power-cut of the terminal apparatus 102, a removable operation of the IC card and the like, so that burden is put on the user, the following operation can be performed: permitting the IC card 103 to re-obtain the license 1600 only for a predetermined number of times; or communicating with the broadcast station 101 through the communication network 105, and allowing a re-obtainment of the license 1600 with reference to TL 1500.

Further, while a transmission device in the broadcast station 101 and the terminal apparatus 102 are structured as a functional block according to the embodiment of the present invention, the transmission device in the broadcast station 101 and the terminal apparatus 102 can be realized by causing a general computer device including a CPU, a recording medium and a communication device, to execute a program for realizing the flowcharts shown in FIG. 17 to FIG. 22.

Also, each functional block of a transmission device and a terminal apparatus may be realized by multiple system LSI or may be realized by a single system LSI.

Further, while an example where a content, a license, control information and the like are obtained from a single distribution path according to the embodiment of the present invention, it can be applied to a content distribution system including a compound distribution path that uses both of the digital broadcast and the Internet, or uses both a package media and the Internet.

### (Second Embodiment)

Hereafter, it is explained about a second embodiment of the digital right management system according to the present invention with reference to diagrams. Note that, while the reception device performs management processing using a license ID and a license transformation validity period according to the aforementioned first embodiment, there is a problem that a memory of the IC card with a small memory capacity is taken up because the license is taken in the IC card despite the fact that a user actually views the content or not. This becomes a realistic problem in the case of the tier contract that is a monthly contract and the like. Also, as described above, even in the case where the license after taken in the reception device is recorded not in the IC card but in the terminal apparatus, it is necessary to record and manage the hash value of the license in the IC card in order to prevent a tamper of the license and the like, causing a problem that a mass license management is difficult.

In order to solve the aforementioned problem, in the digital right management system according to the second embodiment, a digital right management system is provided that the amount of data for the license management of the IC card is reduced and an unauthorized use of the license can be prevented, by importing only the license to be actually used by a user using an encryption transformation validity period attached to the license.

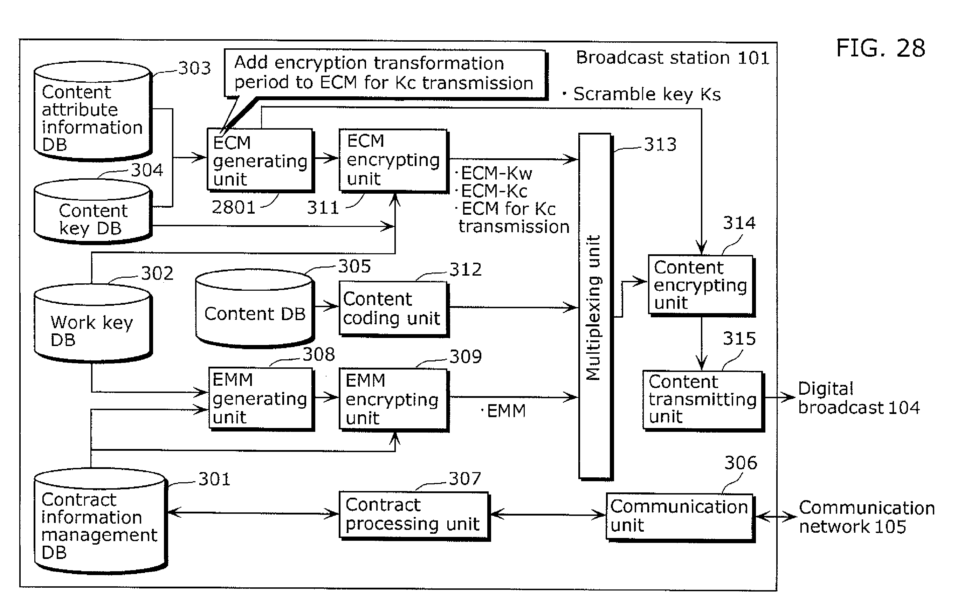

FIG. 28 is a functional block diagram of a broadcast station 101 according to the second embodiment. In the second embodiment, an ECM generating unit 2801 of the broadcast station 101 attaches an encryption transformation validity period to the ECM for Kc transmission. Note that, functions of other processing units are same as in the first embodiment. Therefore, the same explanations are omitted.

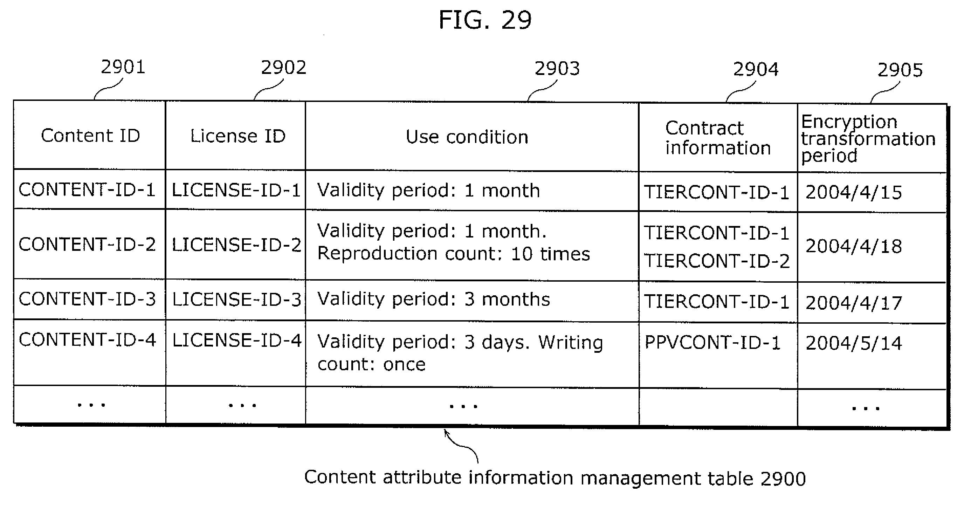

FIG. 29 is a diagram showing an example of a content attribute information management table 2900 recorded in the content attribute information DB 303 according to the second embodiment.

In the content attribute information management table 2900, an encryption transformation validity period 2905 that is a validity period for a re-encryption in the reception device is attached in addition to a content ID 2901, a license ID 2902, a use condition 2903, and contract information 2904. The reception device can import a license by performing re-encryption within the encryption transformation validity period 2905.

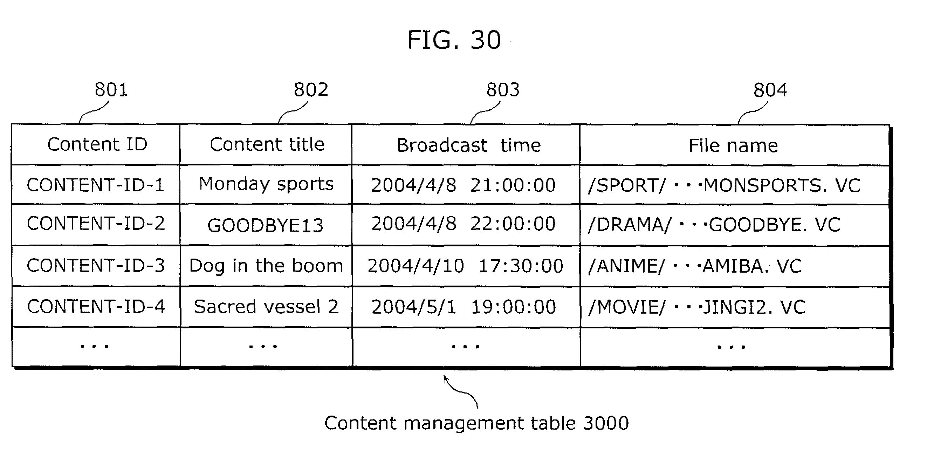

FIG. 30 shows an example of a content management table 3000 recorded in the content DB 305 of the transmission device according to the second embodiment. Note that, the content management table 3000 has a same structure as the content management table 800 shown in FIG. 8 of the first embodiment. Therefore, its explanation is omitted in here.

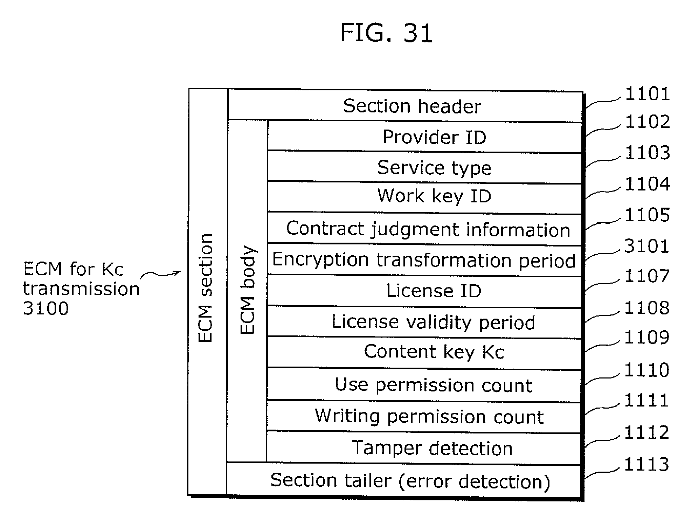

FIG. 31 is a reference diagram showing an example of a data structure of the ECM 3100 for Kc transmission to be transmitted from the transmission device according to the second embodiment.

The ECM 3100 for Kc transmission differs from the ECM 1100 for Kc transmission in that an encryption transformation validity period 3103 that is a validity period assigned in the ECM generating unit 2801 of the transmission device and during which re-encryption can be performed in the reception device is attached, in addition to the provider ID 1102, service type 1103, work key 1104, contract judgment information 1105, license ID 1107, license validity period 1108, content key Kc 1109, use count 1110, writing count 1111 and tamper detection 1112 that are data constituents of the ECM 1100 for Kc transmission shown in the FIG. 11. Further, as in the cases of the ECM-Kw and the ECM-Kc, it is same as in FIG. 11 that the section header 1101 and the section tailer (error detection) 1113 are attached.

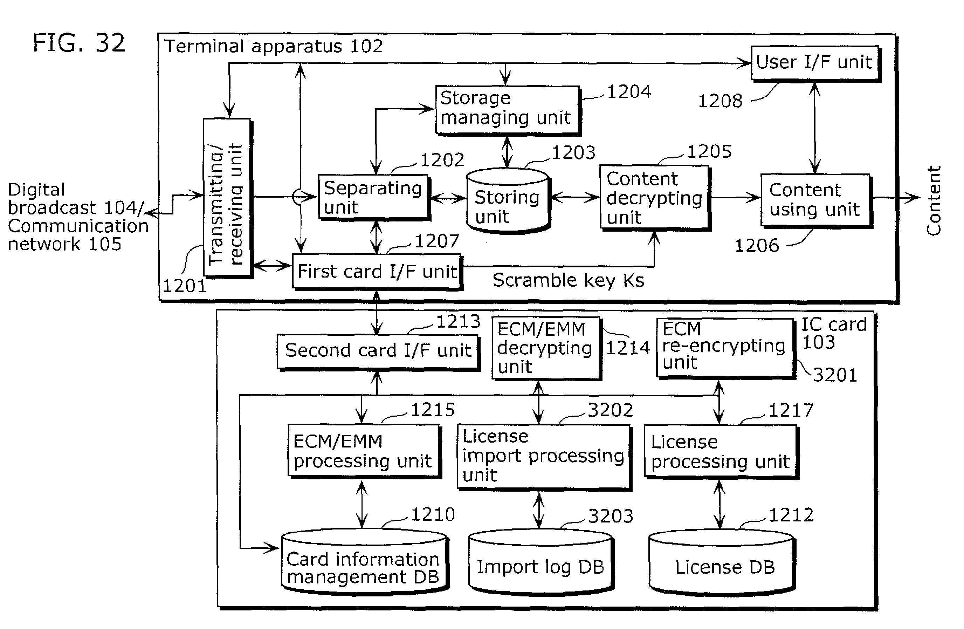

FIG. 32 is a reference diagram showing a system configuration of a reception device according to the second embodiment. The functional structure of the terminal apparatus 102 is same as that of the terminal apparatus 102 shown in FIG. 23 according to the first embodiment. However, in the second embodiment, an ECM re-encrypting unit 3201, a license import processing unit 3202, a license import log data base 3203 are included in the IC card 103.

The license import processing unit 3202 imports a license when a license is imported from the storing unit 1203 of the terminal apparatus 102 to the license DB 1212 of the IC card 103, while checking a decryption result of the ECM for Kc transmission encrypted by the stored unique key Km'.

The import log database 3203 is a license to which a marking is attached by the ECM re-encrypting unit 3201, that is an encryption transformed license, and manages a license ID of a license that is judged to be able to be imported into the IC card 103 by the license import processing unit 2302 as an import log DB 3203.

The ECM re-encrypting unit 3201 transforms an encryption of the ECM for Kc transmission using the stored unique key Km' when the license is received from the transmission device. In other words, the ECM re-encrypting unit 3201 performs marking processing using the stored encryption key Km' on the license for which a contract is made and which is within an encryption transformation validity period.

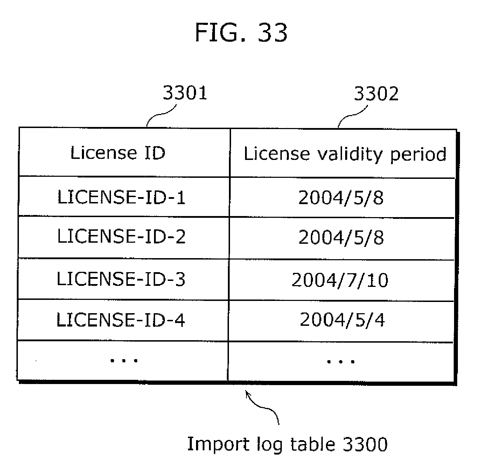

FIG. 33 is a reference diagram showing an example of the import log table (Import List (IL)) 3300 stored in the import log DB 3203 of the IC card 103 of the reception device according to the second embodiment. Note that the import log table 3300 shown in this diagram is almost same as the import log table 1500 shown in FIG. 15 of the first embodiment. However, in the import log table 3300, a license validity period 3302 corresponding to a license ID 3301 is described in place of the license transformation validity period in FIG. 15.

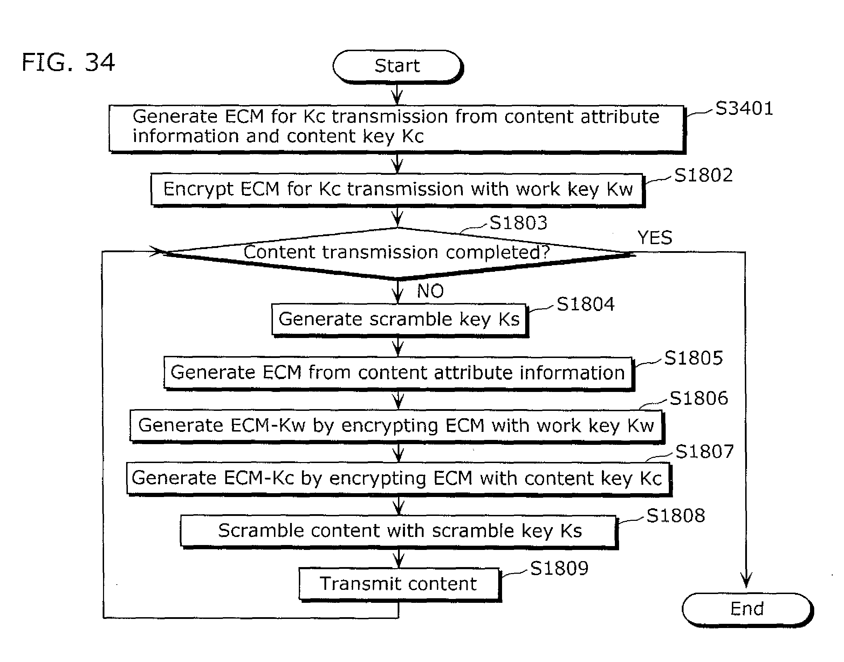

FIG. 34 is a flowchart showing an operational procedure for the transmission device in the broadcast station 101 according to the second embodiment to transmit a content.

The ECM generating unit 2801 of the transmission device first generates an ECM 3100 for Kc transmission to which an encryption transformation validity period 3101 is attached as shown in FIG. 31 (step S3401).

Specifically, the ECM generating unit 2801, taking an ECM generation instruction as a trigger, reads out a license ID 2902, a use condition 2903, and the like with reference to content attribute information DB 303 and content key DB 304 in order to generate the ECM 3100 for Kc transmission having an encryption key for each content. It generates the ECM 3100 for Kc transmission shown in FIG. 31 from the read information. The ECM generating unit 2801 then transmits the generated ECM 3100 for Kc transmission to an ECM encrypting unit 311. Note that the processing from S1802 to 51809 is same as the processing procedure of the transmission device shown in FIG. 18, so that the explanation about the same processing is omitted.

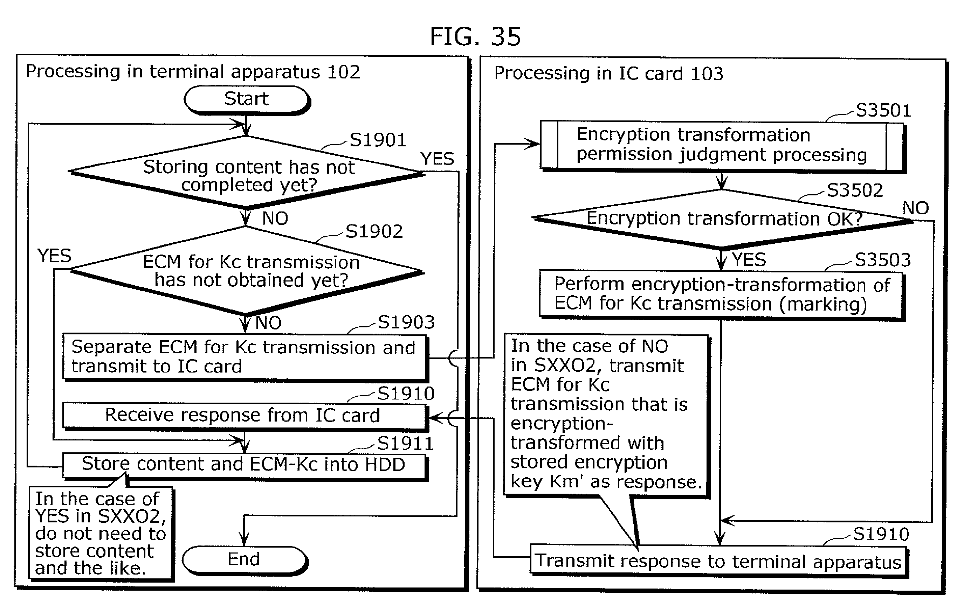

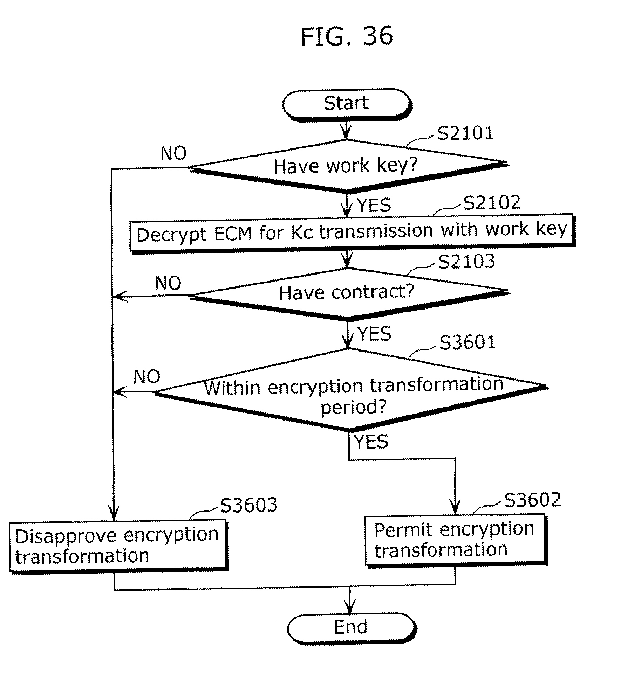

FIG. 35 is a flowchart showing processing of content receiving and encryption transforming by the terminal apparatus 102 and the IC card 103 according to the second embodiment. Here, an encryption transformation permission judging processing (step S3501) by the IC card 103 is separately described in detail using a flowchart shown in FIG. 36.

The storing managing unit 1204 in the terminal apparatus 102 monitors a storing state of the content stored in the storing unit 1203, and checks whether or not the content storing has been completed (step S1901).

Next, in step S1901, in the case of NO where the content storing has not been completed, the step 51902 is executed. On the other hand, in step S1901, in the case of YES, where the content storing has been completed, this content storing processing is terminated.

Further, the separating unit 1202 judges whether or not the ECM 3100 for Kc transmission has been obtained (step S1902).

Next, in step S1902, in the case of NO where the ECM 3100 for Kc transmission has not been obtained, step 51903 is executed. On the other hand, in step S1902, in the case of YES where the ECM 3100 for Kc transmission has been obtained, step S1911 is executed.

Further, the separating unit 1202 separates the ECM 3100 for Kc transmission, and transmits it to the IC card 103 (step S1903).

Then, in the processing by the IC card 103, the license import processing unit 3202 performs encryption transformation permission judging processing with reference to an encryption transformation validity period of the ECM 3100 for Kc transmission (step S3501). Note that, the processing details of the encryption transformation permission judgment (step S3501) are described using a flowchart of FIG. 36.

Next, the ECM re-encrypting unit 3201 judges whether or not a license can be re-encrypted using a result of the encryption transformation permission judgment in step S3501 (step S3502). In the case where the encryption transformation is permitted (YES in step S3502), the ECM re-encrypting unit 3201 re-encrypts (marking) the ECM 3100 for Kc transmission with a stored encryption key Km', and transforms the encryption (step S3503). On the other hand, in the case where the encryption transformation is not permitted (NO in step S3502), the ECM re-encrypting unit 3201 transmits the ECM 3100 for Kc transmission that is not re-encrypted with the stored encryption key Km' (i.e. marking is not added) to the terminal apparatus 102 as a response (step S1910).

Note that, in step S3502, as in the case where a re-encryption by the ECM re-encrypting unit 3201 is not permitted, in the case where an encryption transformation of the license of a current content is not permitted, that can be presented to a user as a message. Also, in this case, the ECM re-encrypting unit 3201 does not necessarily need to transmit the ECM 3100 for Kc transmission that is not re-encrypted by the stored encryption key Km' (i.e. marking is not attached) to the terminal apparatus 102.

The first card I/F unit 1207 of the terminal apparatus 102 then receives a response from the IC card 103 (step S1910). Specifically, the first card I/F unit 1207 receives a response to the transmission of the ECM 1100 for Kc transmission from the second card I/F unit 1213 of the IC card 103.

Further, the storage managing unit 1204 of the terminal apparatus 102 stores the content, the ECM-Kc and the ECM 2100 for Kc transmission that is re-encrypted by the stored encryption key Km' returned from the IC card 103, into the storing unit 1203 (step S1911). As described above, the content storing processing by the terminal apparatus 102 and the IC card 103 is described with reference to FIG. 35.

FIG. 36 is a flowchart showing an operational procedure in the encryption transformation permission judgment processing (corresponding to S3501 in FIG. 35) by the terminal apparatus 102 according to the second embodiment.

The ECM/EMM decrypting unit 1214 of the IC card 103 first judges whether or not there is a work key Kw 203 for decrypting the ECM 3100 for Kc transmission with reference to the card management information DB 1210 (step S2101).

Next, in step S2101, in the case of YES where there is a work key Kw 1406, the step S2102 is executed. On the other hand, in step S2101, in the case of NO where there is no work key Kw 1406, the step 53603 is executed.

The ECM/EMM decrypting unit 1214 then decrypts the ECM 3100 for Kc transmission with the work key Kw 1406 (step S2102).

Further, the ECM/EMM processing unit 1215 judges whether or not the IC card 103 has a contract for viewing the current content (step S2103). Specifically, the ECM/EMM processing unit 1215 compares the contract judgment information 1105 of the ECM 3100 for Kc transmission with the tier contract ID 1402 or the PPV contract ID 1403 of the provider unique information table 1400 stored in the card management information DB 1210, and judges whether or not one of the IDs matches the contract judgment information 1105. Additionally, it also refers to the validity period 1404 of the provider unique information table 1400 stored in the card management information DB 1210, and checks whether or not the current time is within the validity period 1404. As the current time herein, the terminal apparatus 102 transmits, to the IC card 103, a current time obtained from a current time managing unit that is not shown in the diagram in the terminal apparatus 102 of FIG. 32, together with the ECM 2100 for Kc transmission in step S1910.

Then, in step S2103, in the case of YES, where one of the IDs matches and the current time is before the validity period 1404, step 53601 is executed. On the other hand, in step S2103, in the case of NO, where none of the IDs matches, or where the current time expires the validity period 1404, step 53603 is executed.

The ECM re-encrypting unit 3201 then judges whether or not the current time is within the encryption transformation validity period described in the ECM 3100 for Kc transmission (step S3601). In the case where the current time is before the encryption transformation validity period (YES in step S3601), the ECM re-encrypting unit 3201 judges that the marking can be performed, and permits re-encryption of the ECM 3100 for Kc transmission with the stored encryption key Km' (step S3602). On the other hand, the license import processing unit 3202 does not permit re-encryption of the ECM 3100 for Kc transmission (step S3603), in the case where the current time is not before the encryption transformation period (NO in step S3602).

Specifically, in step S3601, the license import processing unit 3202 judges whether or not the ECM 3100 for Kc transmission is within the encryption transformation period by comparing with the current time obtained together with the ECM 3100 for Kc transmission from the terminal apparatus 102 with reference to the encryption transformation period 3101 of the ECM 3100 for Kc transmission.

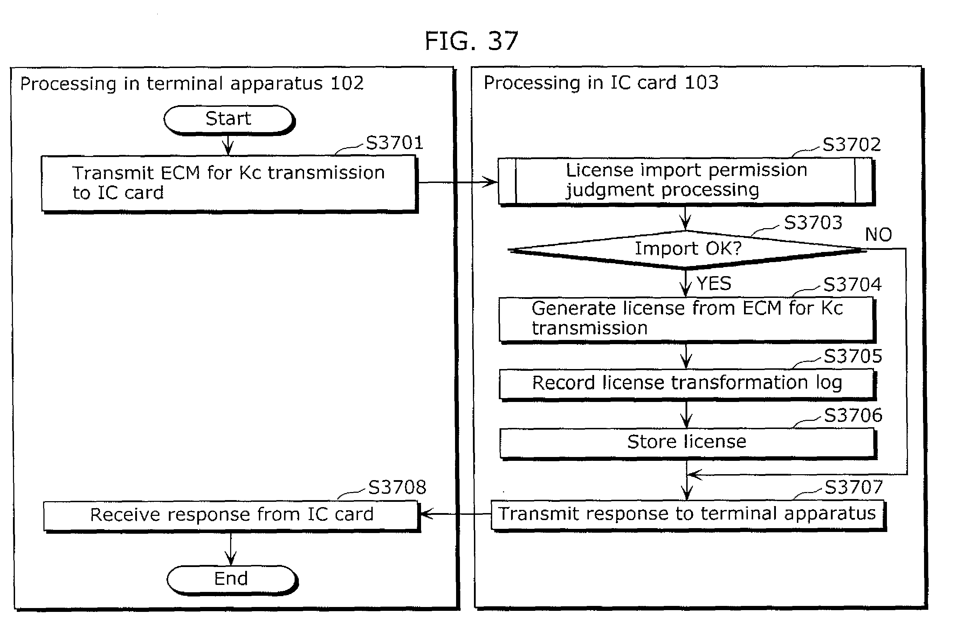

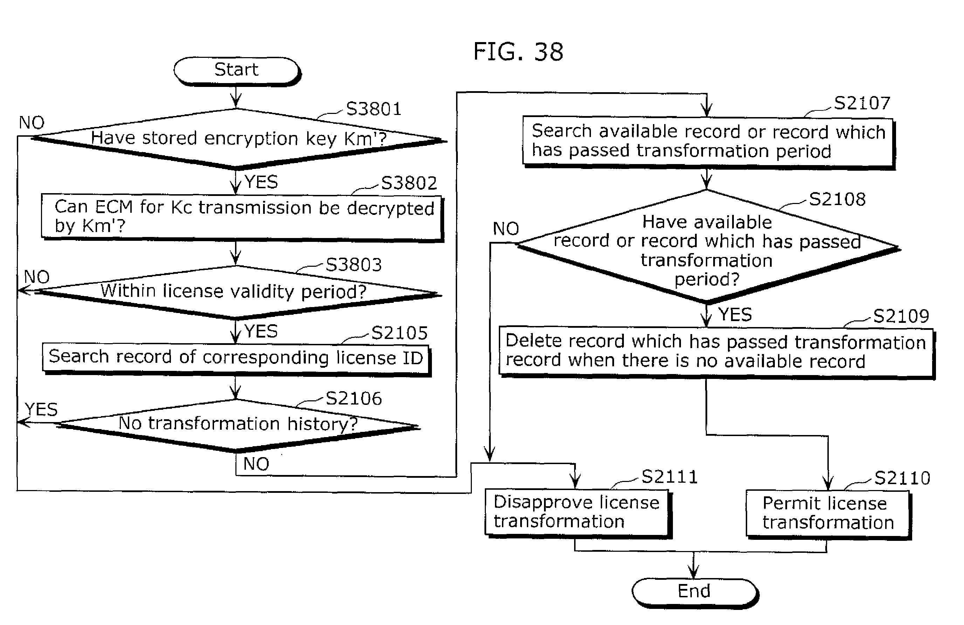

FIG. 37 is a flowchart showing a processing procedure when the terminal apparatus 102 and the IC card 103 imports a license according to the second embodiment. Here in this processing, license import permission judging processing (corresponding to step S3702) performed by the IC card 103 is described separately using the flowchart shown in FIG. 38.

Note that, the processing at the time of license importing may be performed before viewing the content corresponding to the license, but it may be also performed when a user views the content.

First, the ECM 3100 for Kc transmission stored in the storing unit 1203 of the terminal apparatus 102 is transmitted to the IC card (step S3701).

The IC card 103 then judges whether or not the license of the received ECM 3100 for Kc transmission can be imported (step S3702).

Specifically, the second card I/F unit 1213 of the IC card 103 receives the ECM 3100 for Kc transmission transmitted by the first card I/F unit 1207 of the terminal apparatus 102, and executes judgment about whether or not the license importing can be performed by confirming whether or not the ECM 3100 for Kc transmission is marked, that is, about whether or not the ECM 3100 for Kc transmission is re-encrypted with the stored encryption key Km'. Note that, the details about this license capturing permission judgment processing are described with reference to FIG. 38.

The license import processing unit 3202 of the IC card 103 checks whether or not an importing of the license is permitted as the result of the license import permission judgment processing (step S3703).

In step S3703, in the case of YES where the license importing is permitted, step 53704 is executed. On the other hand, in step S3703, in the case of NO where the license importing is not permitted, step S3707 is executed without the importing of the license.

Then, in step S3703, in the case of YES, the license import processing unit 3202 transforms the license of the ECM 3100 for Kc transmission, and generates a license 1600 for stored viewing as shown in FIG. 16 (step S3704). Specifically, the license import processing unit 3202 obtains a license ID 1107, a license validity period 1108 and the like included in the ECM 3100 for Kc transmission, and generates the license 1600.

The license import processing unit 3202 then records the transformation log of the license in an import log DB 3203 (step 53705). Specifically, the license import processing unit 3202 adds the license ID 1107 and the validity period 1108 of the ECM 3100 for Kc transmission respectively to the license ID 1501 and the validity period of the TL 1500 stored in the import log DB 3203.

The license processing unit 1217 then stores the imported license into the license DB 1212 (step S3706).

The second card I/F unit 1213 then transmits a response, to the terminal apparatus 102, for the license transformation request by the ECM 3100 for Kc transmission (step S3707). Specifically, the second card I/F unit 1213 generates one of the following response messages and sends it to the terminal apparatus 102: a message indicating that a license importing of the content is permitted and the license importing has been completed; a message indicating that the license importing of the content has not been permitted; and the message indicating that the license importing has been failed.

The first card I/F unit 1213 then transmits a response to the license transformation request by the ECM 3100 for Kc transmission from the IC card 102 (step S3708).

Note that, in step S3703, as in the case of NO, where the license importing of the content is not permitted, that may be presented to the user as a message.

Also, in the case where the imported license is stored not in the license DB 1212 of the IC card 103 but in the terminal apparatus 102, in step S3706, the license ID and hash value of the imported license and the like may be stored in the IC card 103, and the license imported in the terminal apparatus 102 may be transmitted as a response in step S3707.

FIG. 38 is a flowchart showing a detailed operational procedure of the license importing permission judgment (corresponding to step S3702) shown in FIG. 37, in the reception device according to the second embodiment.

The ECM/EMM decrypting unit 1214 of the IC card first judges whether or not there is the stored encryption key Km' 203 for decrypting the ECM 3100 for Kc transmission, with reference to the card management information DB 1210 (step S3801).

Specifically, the ECM/EMM decrypting unit 1214 reads out a stored encryption key Km' corresponding to the card ID, with reference to the card management information DB 1210. Herein, in the case where the card ID of the ECM 3100 for Kc transmission does not match the stored encryption key Km', the processing is performed considering that there is no stored encryption key Km' 203 (NO in step S3801).

Then, in step S3801, in the case of YES, where there is the stored encryption key Km', step S3802 is executed. On the other hand, in step S3801, in the case of NO, where there is no stored encryption key Km', step S2111 in which the license importing is not permitted is executed.

After that, the ECM/EMM decrypting unit 1214 judges whether or not the ECM 1100 for Kc transmission can be decrypted with the stored encryption key Km' (step S3802).

Specifically, the ECM/EMM decrypting unit 1214 decrypts the encryption portion of the ECM 3100 for Kc transmission using AES, with the stored encryption key Km' obtained in step S3801, and judges whether or not the encryption can be decrypted with the stored encryption key Km' by making the tamper detection 1110 of the ECM 3100 for Kc transmission to detect whether or not the ECM 3100 for Kc transmission is tampered. Further, in the case where it is detected that the ECM 3100 for Kc transmission is tampered, the step S2111 is executed and the processing is terminated since the license importing cannot be permitted.

In the case where the ECM 1100 for Kc transmission can be decrypted with the stored encryption key Km' (YES in step S3802), the license import processing unit 3202 judges whether or not the ECM 3100 for Kc transmission is within the validity period of the license (step S3803). Specifically, the license import processing unit 3202 judges whether or not the ECM 3100 for Kc transmission is within the validity period by comparing the current time obtained together with the ECM 3100 for Kc transmission from the terminal apparatus, with reference to the validity period 1108 of the license of the ECM 3100 for Kc transmission.

Then, in step S3808, in the case of YES where the validity period 1108 is after the current time, it is judged that the current time is within the validity period and step S2105 is executed. On the other hand, in step S3808, in the case of NO, where the validity period 1108 is before the current time, it is judged that the current time is out of the validity period and step S2111 is executed.

Note that, the judgment processing of the validity period in step 53803 is performed for not storing unnecessary license that has passed the validity period. Therefore, this processing can be omitted.

The license import processing unit 3202 searches for a transformation log of the license ID with reference to the import log DB 3203 (step S2105). Specifically, the license import processing unit 3202 searches for a record of the license ID 1501 matching the license ID 1107 of the ECM 3100 for Kc transmission, with reference to the TL 1500 of the import log DB 3203.

The license import processing unit 3202 then judges whether or not there is a transformation log of the license ID (step S2106). Specifically, the license import processing unit 3202 checks whether or not there is a record in which the license ID 1501 of the TL 1500 matches the license ID 1107 of the ECM 3100 for Kc transmission in the import log DB 3203, with reference to the search result obtained in step S2105.

In step S2106, in the case of NO where there is no import log of the license ID, step 52107 is executed. On the other hand, in the case of YES where there is the import log of the license, step S2111 is executed.

The license import processing unit 3202 searches whether or not, in TL 1500, there is an available record or a record which has passed the validity period (step S2107).

Specifically, the license import processing unit 3202 searches for an available record with reference to TL 1500 in order to find a record to which a license ID for performing another license transformation is added. In the case where the is no available record, the license import processing unit 3202 compares the license transformation period 1502 with the current time obtained together with the ECM 3100 for Kc transmission from the terminal apparatus 102, and searches for a record whose current time is before the license transformation period 1502.

The license import processing unit 3202 judges whether or not there is an available record or a record which has passed the license transformation period in the transformation log DB 1211 (step S2108). Specifically, the license import processing unit 3202 judges whether or not there is an available record or a record which has passed the license transformation period 1502 with reference to the search result obtained in step S2107.

In step S2108, in the case of YES where there is an available record or a record whose license transformation period 1502 has passed, step S2109 is executed. On the other hand, in step S2108, in the case of NO where there is no available record or a record which has passed the license transformation period, step S2111 is executed because the license transformation cannot be executed any more.

The license import processing unit 3202 then deletes, based on the result judged in step S2108, the record which has passed the license transformation period 1502 when there is no available record, so as to allow addition of new license ID 1501 (step S2109).

The license import processing unit 3202 judges that the license of the ECM 3100 for Kc transmission can be permitted, and terminates the license transformation permission judgment processing (step S2110). Also, the license import processing unit 3202 judges that the license of the ECM 3100 for Kc transmission is not permitted, and terminates the license transformation permission judgment processing (step S2111).

Note that, while it is not explained using drawings in the second embodiment, a processing procedure at the time of reproducing content after capturing the license in the license DB 1212 of the IC card 103 is same as the processing shown in FIG. 22. Therefore, the same explanation is not repeated in here.

As described above, in the digital right management system according to the second embodiment, an encryption transformation period is added to the ECM 3100 for Kc transmission in the transmission device. In the reception device, the received ECM 3100 for Kc transmission is judged whether or not it is within the encryption transformation period or not. In the case where the judgment says that it is within the encryption transformation period, the ECM re-encrypting unit 3201 re-encrypts the license obtained with the stored encryption key Km', returns the re-encrypted license from the IC card 103 to the terminal apparatus 102, and stores it into the storing unit 1203.

Accordingly, in the case where the ECM 3100 for Kc transmission stored in the storing unit 1203 of the terminal apparatus 102 is imported into the IC card 103 for viewing the content, the license import processing unit 3202 of the IC card 103 judges whether or not the ECM 3100 for Kc transmission obtained from the storing unit 1203 of the terminal apparatus 102 can be decrypted using the stored encryption key Km', and imports only the ECM 3100 for Kc transmission that can be decrypted. Accordingly, the license import processing unit 3202 can import only the license relating to the content that a user actually views, and the information relating to the license is stored in the terminal apparatus 102, so that a problem of taking-up the capacity of the IC card 103 whose memory capacity is limited can be avoided.

Also, based on the encryption transformation period added to the ECM 3100 for Kc transmission, a license importing permitted period can be controlled as the result of controlling the encryption transformation period. Therefore, an unauthorized use of the content during the period of time when the contract is not made can be prevented.

Further, in the present invention, the import log DB 3203 manages the import log table 3300 in which the license ID 3301 and the validity period 3302 are stored. Therefore, a use of license which has passed the validity period 3302 can be appropriately prevented.

Note that, in the description of the second embodiment, the ECM re-encrypting unit 3201 of the IC card 103 re-encrypts the ECM 3100 for Kc transmission using the stored encryption key Km'. However, not limited to the above, in the present invention, the ECM 3100 for Kc transmission can be re-encrypted using other marking methods such addition of a received flag, addition of a terminal/card ID, and addition of a signature. Further, as the encryption key used for the re-encryption of the ECM 3100 for Kc transmission, a common encryption key for multiple terminal apparatuses 102 and the like may be used other than a stored encryption key Km' that is unique to a terminal apparatus 102 or an IC card 103.

Further, in the description of the second embodiment, an encryption transformation period is added to the ECM 3100 for Kc transmission in the transmitter. However, in the case where the encryption transformation period is not added in the transmitter, a decision about whether or not to permit an encryption transformation may be determined based on a predetermined condition when the encryption of the ECM 3100 for Kc transmission is transformed in the terminal apparatus 102. For example, following cases are considered: a case where an encryption transformation period is determined as predetermined days before the validity period of the ECM 3100 (license) for Kc transmission; and a case where an encryption transformation period is determined based on a current time received together with the ECM 3100 from the terminal apparatus 102.

### (Variation)

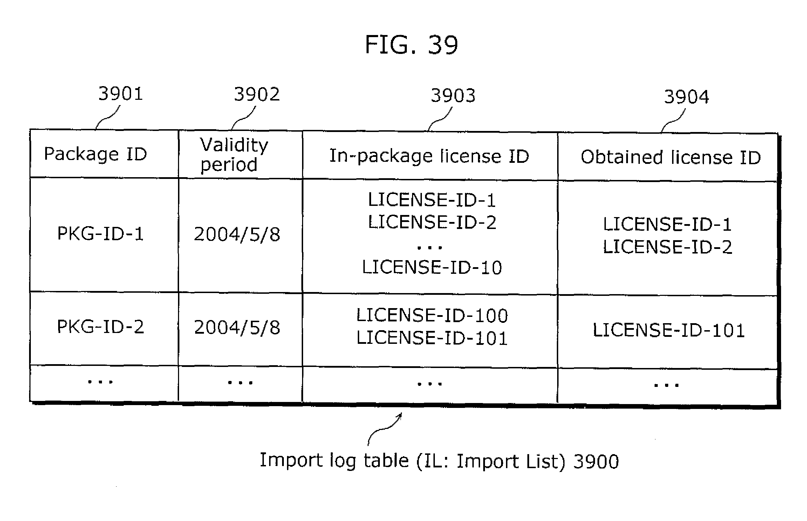

Next, a variation of capturing a license in the receiver is described with reference to FIG. 39 to FIG. 42. Note that this variation is characterized in that a license capturing is managed based on a package ID, a license ID (obtained license ID) and a validity period.

FIG. 39 is a diagram showing an import log table (Import List (IL)) 3900 for Pay Per Content (PPC) managed by the IC card 103 according to the present variation. Each record in the IL 3900 for PPC is generated when a content (package) of the PPC is purchased.

The difference with the aforementioned import log table is that a package ID 3901 and an in-package license ID 3903 are described. Here, the package ID 3901 is information for identifying a purchased package, is, for example, described as "PKG-ID-1" showing a unit for purchasing a content. There is a case when multiple contents (e.g. a package of ten stories of a drama) are included in a package. In this case, they are managed as the in-package ID 3903 corresponding to the package ID 3901. Note that, there is also a case where a content may be included in packages having different licenses. For example, when there are a sports package and a J-League package, a content relating to the J-league may be included in both packages.

The validity period 3902 is a validity period corresponding to the package ID 3901. The longest (the latest validity period) period among the validity periods of the license in a package is described.

The in-package license ID 3903 is a list of IDs of the licenses included in a package. For example, it is described as "LICENSE-ID-1, LICENSE ID-2, and ...", and consequently a license importing state in a package can be presented to a user. Note that, it is assumed that the in-package license ID 3902 is not the required information but is used for presenting to a user a relationship between a license included in a package and a license that has been already obtained, together with the obtained license ID 3904.

The obtained license ID 3904 indicates a license that is already imported for the in-package license ID 3903, and is indicated, for example, as "LICENSE-ID-1, LICENSE-ID-2".

Note that, a management method for the information to be managed in such import log table 3900 may be changed depending on a package ID 3901 and an assigning method of an in-package license ID 3903 (whether assigning an ID in a global and a unique manner or assigning an ID unique to each service provider).

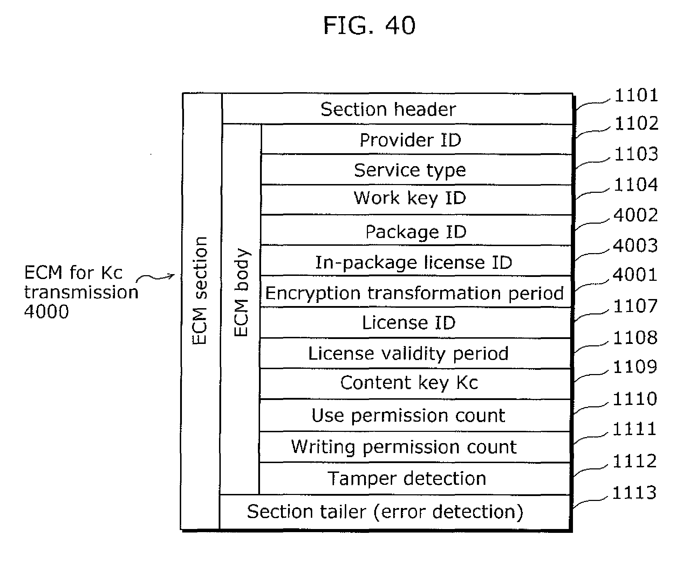

FIG. 40 is a reference diagram showing an example of an ECM 4000 for Kc transmission distributed from the transmission device to the reception device according to the present variation. In the ECM 4000 for Kc transmission according to the present variation, the followings are described: a package ID 4002 corresponding to an in-package license ID 3903 that is added in an import log table for PPC, and is stored in the import log table 3900 of the import log DB 3203 when the license is imported; an in-package license ID 4003 corresponding to the in-package license ID 3903 shown in FIG. 39; and an encryption transformation period as in the case of the second embodiment. Note that, the in-package license ID 4003 is a list of license IDs included in a package, and the same value is transmitted from the ECM 4000 for Kc transmission in the same package.

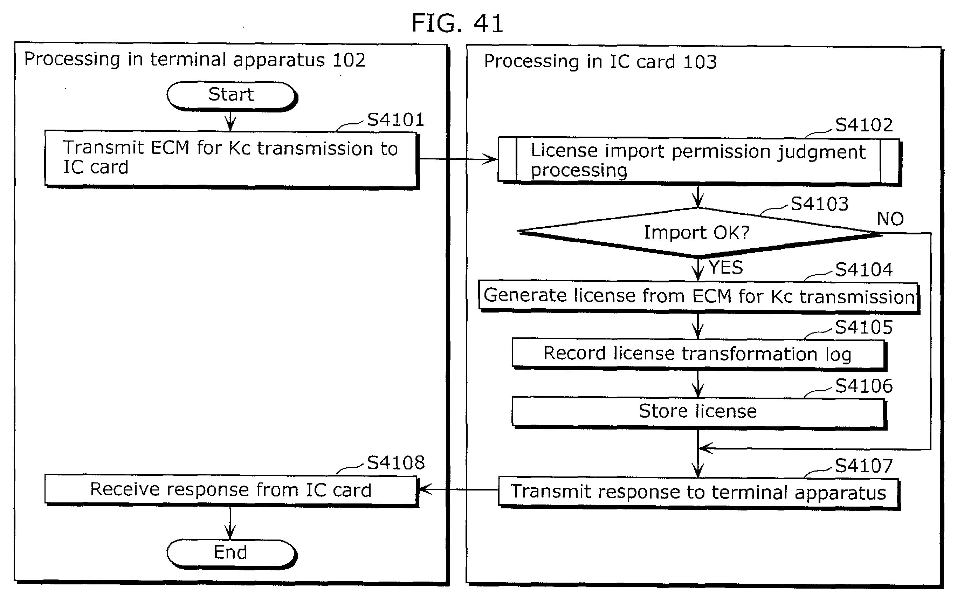

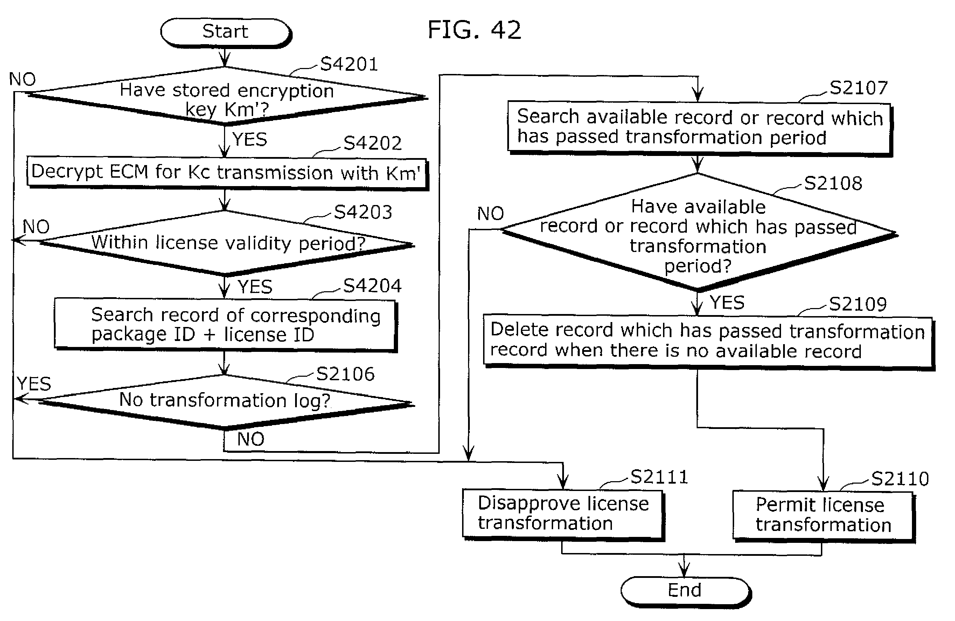

FIG. 41 is a flowchart showing a processing procedure when the reception device imports a license for PPC, according to the present variation. Note that, a license import permission judgment processing shown in this flowchart (corresponding to step S4102) is described in detail in FIG. 42.

First, the ECM 4000 for Kc transmission stored in the storing unit 1203 of the terminal apparatus 102 is transmitted to the IC card (step S4101).

Next, the IC card 103 judges whether or not the license of the received ECM 4000 for Kc transmission can be imported (step S4102).

The license import processing unit 3202 of the IC card 103 then checks whether or not the license importing is permitted as the result of the license imoirt permission judgment (step S4103).

In step 4103, in the case of YES, where the license importing is permitted, step S4104 is executed. On the other hand, in step S4103, in the case of NO where the license importing is not permitted, step S4107 is executed without the importing of the license.

In the case of YES in step S4103, the license import processing unit 3203 transforms a license of the ECM 4000 for Kc transmission, and generates a license 1600 for stored viewing as shown in FIG. 16 (step S4104).

Next, the license import processing unit 3202 records the transformation log of the license into the import log DB 3203 (step S4105). Specifically, in the case of importing a first license in the package, the license import processing unit 3202 records, in the import log DB 3203, the package ID 3901, validity period 3902, and in-package license ID 3903 in the capturing log table 3900. Also, in the case of importing a license from the second time in the package, the license import processing unit 3202 records, into the import log DB 3203, only the obtained license ID 3904 in the capturing log table 3900. This is because other items have been already recorded.

The license processing unit 1217 then stores the imported license into a license DB 1212 (step S4106).

After that, the second card I/F unit 1213 transmits, to the terminal apparatus 102, a response to a license transformation request from the ECM 4000 for Kc transmission (step S4107).

FIG. 42 is a flowchart showing a specific operational procedure of the license capturing permission judgment (corresponding to step 54102) shown in FIG. 41.

The ECM/EMM decrypting unit 1214 of the IC card 103 judges whether or not there is a stored encryption key Km' for decrypting the ECM 4000 for Kc transmission with reference to the card management information DB 1210 (step S4210).

Then, in step S4201, in the case of YES where there is the stored encryption key Km', step 54202 is executed. On the other hand, in step S4201, in the case of NO where there is no stored encryption key Km', step S2111 in which a license importing is not permitted is executed.

The ECM/EMM decrypting unit 1214 then decrypts the ECM 1100 for Kc transmission with the stored encryption key Km' (step 54202).

Next, after decrypting the ECM 4000 with the stored encryption key Km', the license import processing unit 3202 judges whether or not a license of the ECM 4000 for Kc transmission is within the validity period (step S4203).

Then, in step S4203, in the case of YES where the validity period is after the current time, it is judged that the license is within the validity period, and step 54204 is executed. On the other hand, in step S4203, in the case of NO where the validity period 1108 is before the current time, it is judged that the license is out of the validity period, and step S2111 is executed.

The license import processing unit 3202 searches for a transformation log of the license ID with reference to the import log DB 3203 (step S4204). Specifically, the license import processing unit 3202 searches a match/mismatch of records based on a pair of the package ID 4002 and the license ID 4003 of the ECM 4000 for Kc transmission, with reference to the TL 1500 of the import log DB 3203.

The license import processing unit 3202 then judges whether or not there are transformation logs of the package ID and the license ID (step S2106). Specifically, the license import processing unit 3202 checks whether or not there is a record, in the import log DB, showing a matching between a pair of the package ID 4002 and the in-package license ID 4003 of the ECM 4000 for Kc transmission and a pair of the package ID 3901 and the in-package license ID 3903 of the import log table 3900.

In step S2106, in the case of NO, where there are no transformation logs of the package ID and the license ID, step S2107 is executed. On the other hand, in step S2106, in the case of YES where there are transformation logs of the package ID and the license ID, step S2111 is executed. Note that, the processing after S2107 is same as the processing shown in FIG. 38. Therefore, the explanation about the same processing is omitted.

As described above, in the present variation, a license obtainment is managed in the IC card 103 of the reception device by controlling an obtainment of a license whose package ID 4002 and the in-package license ID 4003 are duplicated, based on the package ID 4002, in-package license ID 4003 and validity period 1108 included in the ECM 4000 for Kc transmission. Accordingly, the package ID 3901 is assigned to a package, and the in-package license ID 3903 assigned to multiple contents included in the package can be uniformly managed even in a different package. Therefore, while preventing an unauthorized use of the license by effective use of the IC card 103 with small memory capacity, license data can be managed in a more suitable manner for an actual use by a user, for example, to be suitable for the case where a drama program series broadcasted for twelve times in three months and contents are purchased at once.

### Industrial Applicability

A digital right management system according to the present invention has an effect that both an unauthorized license obtainment and an increase of data size to be managed can be prevented by managing a license ID and validity period obtained by a terminal apparatus as a list and holding the list as a record at least during the validity period of the license. It is useful as a digital right management system and the like in a content distribution service such as a digital broadcast, a digital CATV, and the Internet. Also, it is applicable to a digital right management system in the content distribution service by a portable media and the like such as a package media.

## Claims

1. A reception device which obtains a license, transmitted from a transmission device, for permitting use of a content, and uses the content based on the license,
wherein at least a license import period and a license ID are assigned to the license, the license import period being a period during which the license can be imported to said reception device and made available for use,
said reception device comprising:
a license importing unit operable to import the license transmitted from the transmission device;
a log recording unit operable to hold a license import log including the license ID and the license import period, at least until the license import period expires; and
a license import controlling unit operable to control importing of the license to be performed by said license importing unit, in the case where the license import log includes a license ID that is the same as the license ID of the license imported by said license importing unit.

2. The reception device according to Claim 1, further comprising:
a license decrypting unit operable to decrypt an encrypted license once before the encrypted license is imported by said license importing unit, and to generate a decrypted license;
a re-encrypting unit operable to re-encrypt the decrypted license using an encryption key that is different from an encryption key used for encrypting the encrypted license, and to generate a re-encrypted license; and
a storing unit operable to hold at least the re-encrypted license.

3. The reception device according to Claim 2,
wherein an encryption transformation period is further assigned to the license, the encryption transformation period being a period during which a re-encryption can be performed by said re-encrypting unit, and
said re-encrypting unit is operable to generate the re-encrypted license by re-encrypting a license within the encryption transformation period, and to store the re-encrypted license into said storing unit.

4. The reception device according to Claim 3,
wherein said reception device is made up of a terminal apparatus which reproduces the content and a security module which is operated in conjunction with said terminal apparatus,
said storing unit is included in said terminal apparatus,
at least one of said license importing unit, said log recording unit, said license import controlling unit and said re-encrypting unit is included in said security module, and
the encryption key used by said re-encrypting unit is a stored encryption key that is unique to one of said security module and said terminal apparatus.

5. The reception device according to Claim 3, further comprising
a re-encrypted license decrypting unit operable to judge whether or not the license has been re-encrypted, and to decrypt the re-encrypted license in the case of judging that the license has been re-encrypted.

6. The reception device according to Claim 1, further comprising
a contract judging unit operable to judge whether or not a contract regarding the license to be obtained by said license importing unit has been made,
wherein said license importing unit is operable to judge whether or not the license import period is valid in the case where said contract judging unit judges that the contract has been made, and to permit importing of the license when judging that the license import period is valid.

7. The reception device according to Claim 6,
wherein said reception device is made up of a terminal apparatus which reproduces the content, and a security module which is operated in conjunction with said terminal apparatus,
said contract judging unit is included in said security module.

8. The reception device according to Claim 1,
wherein, in the case where the license is imported by said license importing unit, a license import log is recorded further in said log recording unit, the license import log including a license ID and a validity period of the imported license.

9. The reception device according to Claim 1, further comprising
a license import period generating unit operable to generate the license import period of the license import log in the case where the license import period is not set in the license,
wherein said log recording unit is operable to hold a license import log including the license ID and the generated license import period.

10. The reception device according to Claim 1,
wherein a license import condition is further assigned to the license, and
said license import controlling unit is operable to control importing of the license based on the license import condition.

11. The reception device according to Claim 1, further comprising
a message presenting unit operable to present, in the case where the license is not imported by said license import controlling unit, at least one of the following: an indication that the license cannot be imported; and a reason why the license cannot be imported.

12. The reception device according to Claim 1,
wherein the license import period is one of a validity period of the license and a period that is set separately from the validity period of the license.

13. The reception device according to Claim 1,
wherein a package ID that is an identification number of a package, an in-package license ID that is an identification number included in the package, and a validity period of the license are assigned further to the license, the package being a unit off purchasing the content,
said log managing unit is operable to record, at a first importing of the license in the package, a license import log including the package ID, the in-package license ID, the validity period, and an imported license ID that has been already imported,
said log managing unit is operable to update and record, at a second and subsequent importing of the license in the package, only the imported license ID of the license import log, and
said license import controlling unit is operable to control importing of the license performed by said license importing unit, in the case where the license import log includes a pair that is the same as a pair of the package ID and the in-package license ID.

14. A transmission device which transmits a license to a reception device which uses a content based on the license for permitting use of the content, said transmission device comprising:
a license generating unit operable to generate the license;
a license ID assigning unit operable to assign the license with a license ID that is an identification number;
a license import period assigning unit operable to assign the license with a license import period that is a period during which at least the license can be imported to the reception device and made available for use; and
a transmitting unit operable to transmit, to the reception device, the license to which at least the license ID and the license import period are assigned.

15. The transmission device according to Claim 14,
wherein the reception device comprises a re-encrypting unit operable to generate a re-encrypted license by re-encrypting a decrypted license using an encryption key that is different from an encryption key used for encrypting the license,
said transmission device further comprises
an encryption transformation period assigning unit operable to assign the license with an encryption transformation period that is a period during which re-encrypting of the license can be performed by the re-encrypting unit,
wherein said transmitting unit is operable to transmit, to the reception device, the license to which at least the license ID and the encryption transformation period are assigned.

16. The transmission device according to Claim 14, further comprising
a license import period assignment determining unit operable to determine whether or not to assign the license import period to the license.

17. The transmission device according to Claim 14, further comprising
a license import condition assigning unit operable to assign a license import condition to the license.

18. The transmission device according to Claim 14, further comprising
a license encrypting unit operable to generate an encrypted license by encrypting the license.

19. The transmission device according to Claim 14,
wherein the license import period is one of a validity period of the license and a period that is set separately from the validity period of the license.

20. A security module which operates in conjunction with a terminal apparatus that uses a content based on a license,
wherein at least a license import period and a license ID are assigned to the license, the license import period being a period during which the license can be imported to the reception device and made available for use,
said security module comprises:
a license importing unit operable to import the license transmitted from the transmission device;
a log recording unit operable to hold a license import log including the license ID and the license import period, at least until the license import period expires; and
a license import controlling unit operable to control importing of the license performed by said license importing unit, in the case where the license import log includes a license ID that is the same as the license ID of the license imported by said license importing unit.

21. The security module according to Claim 20, further comprising:
a license decrypting unit operable to decrypt an encrypted license once before the encrypted license is imported by said license importing unit, and to generate a decrypted license; and
a re-encrypting unit operable to re-encrypt the decrypted license using an encryption key that is different from an encryption key used for the encryption of the encrypted license, and to generate a re-encrypted license.

22. The security module according to Claim 20,
wherein the terminal apparatus comprises a storing unit operable to hold at least the re-encrypted license,
an encryption transformation period is further assigned to the license, the encryption transformation period being a period during which the license can be re-encrypted by said re-encrypting unit, and
said re-encrypting unit is operable to generate the re-encrypted license by re-encrypting the license within the encryption transformation period, and to store the re-encrypted license into the storing unit.

23. The security module according to Claim 20, further comprising
a contract judging unit operable to judge whether or not a contract regarding the license to be obtained by said license importing unit has been made,
wherein said license importing unit is operable to judge, in the case where the contract judging unit judges that the contract has been made, whether or not the license import period is valid, and to permit importing the license when the license import period is valid.

24. The security module according to Claim 21, further comprising
a re-encrypted license decrypting unit operable to judge whether or not the license has been re-encrypted, and to decrypt the re-encrypted license in the case where the license has been re-encrypted.

25. A digital right management system, comprising:
a transmission device operable to transmit, to a user, a license for giving permission on using a content; and
a reception device operable to obtain the license and to securely use the content based on the license,
wherein said transmission device includes:
a license generating unit operable to generate the license;
a license ID assigning unit operable to assign the license with a license ID that is an identification number;
a license import period assigning unit operable to assign the license with a license import period that is a period during which at least the license can be imported to said reception device and made available for use; and
a transmitting unit operable to transmit, to said reception device, the license to which at least the license ID and the license import period are assigned, and
said reception device includes:
a license importing unit operable to import the license transmitted from said transmission device;
a log recording unit operable to hold a license import log including the license ID and the license import period, at least until the license import period expires; and
a license import controlling unit operable to control importing of the license to be performed by the license importing unit, in the case where the license import log includes a license ID that is the same as the license ID of the license imported by the license importing unit.

26. The digital right management system according to Claim 25,
wherein said transmission device further includes
an encryption transformation period assigning unit operable to assign the license with an encryption transformation period that is a period during which re-encrypting of the license can be performed by the re-encrypting unit,
wherein said transmitting unit is operable to transmit, to said reception device, the license to which at least the license ID and the encryption transformation period are assigned, and
said reception device further includes:
a license decrypting unit operable to decrypt an encrypted license once before the encrypted license is imported by the license importing unit, and to generate a decrypted license;
a re-encrypting unit operable to re-encrypt the decrypted license using an encryption key that is different from an encryption key used for encrypting the encrypted license, and to generate a re-encrypted license; and
a storing unit operable to hold at least the re-encrypted license.

27. A receiving method for use in a reception device which obtains a license for giving permission on using content from a transmission device which transmits the license, and uses the content based on the license,
wherein at least a license import period and a license ID are assigned to the license, the license import period being a period during which the license can be imported to said reception device and made available for use,
said receiving method comprises:
a license importing step of importing the license transmitted from the transmission device;
a log recording step of holding a license import log including the license ID and the license import period, at least until the license import period expires; and
a license import controlling step of controlling importing of the license to be performed in said license importing step, in the case where the license import log includes a license ID that is the same as the license ID of the license imported in said license importing step.

28. A transmitting method for use in a transmission device which transmits a license for giving permission on using a content, to a reception device which uses the content based on the license, said transmitting method comprising:
a license generating step of generating the license;
a license ID assigning step of assigning the license with a license ID that is an identification number;
a license import period assigning step of assigning the license with a license import period that is a period during which at least the license can be imported to the reception device and made available for use; and
a transmitting step of transmitting, to the reception device, the license to which at least the license ID and the license import period are assigned.

29. A license importing method for use in a security module which operates in association with a terminal apparatus which uses a content based on a license,
wherein at least a license import period and a license ID are assigned to the license, the license import period being a period during which the license can be imported to said reception device and made available for use,
said license importing method comprises:
a license importing step of importing the license transmitted from the transmission device;
a log recording step of holding a license import log including the license ID and the license import period, at least until the license import period expires; and
a license import controlling step of controlling importing of the license to be performed in said license importing step, in the case where the license import log includes a license ID that is the same as the license ID of the license imported in said license importing step.

30. A program for use in a reception device which obtains a license for giving permission on using content from a transmission device which transmits the license, and uses the content based on the license,
wherein at least a license import period and a license ID are assigned to the license, the license import period being a period during which the license can be imported to said reception device and made available for use,
said program comprises:
a license importing step of importing the license transmitted from the transmission device;
a log recording step of holding a license import log including the license ID and the license import period, at least until the license import period expires; and
a license import controlling step of controlling importing of the license to be performed in said license importing step, in the case where the license import log includes a license ID that is the same as the license ID of the license imported in said license importing step.

31. A program for use in a transmission device which transmits license for giving permission on using a content, to a reception device which uses the content based on the license, said program causing a computer to execute:
a license generating step of generating the license;
a license ID assigning step of assigning the license with a license ID that is an identification number;
a license import period assigning step of assigning the license with a license import period that is a period during which at least the license can be imported to the reception device and made available for use; and
a transmitting step of transmitting, to the reception device, the license to which at least the license ID and the license import period are assigned.

32. A program for use in a security module which operates in association with a terminal apparatus which uses a content based on a license,
wherein at least a license import period and a license ID are assigned to the license, the license import period being a period during which the license can be imported to said reception device and made available for use, and
said program causing a computer to execute:
a license importing step of importing the license transmitted from the transmission device;
a log recording step of holding a license import log including the license ID and the license import period, at least until the license import period expires; and
a license import controlling step of controlling importing of the license to be performed in said license importing step, in the case where the license import log includes a license ID that is the same as the license ID of the license imported in said license importing step.
